(19) Europäisches Patentamt
European Patent Office
Office européen des brevets

(11) EP 4 071 485 A1

(12) EUROPEAN PATENT APPLICATION
published in accordance with Art. 153(4) EPC

(43) Date of publication:
12.10.2022 Bulletin 2022/41

(51) International Patent Classification (IPC):
G01N 35/04 (2006.01)    G01N 35/02 (2006.01)
G01N 35/00 (2006.01)

(21) Application number: 19955311.6

(22) Date of filing: 06.12.2019

(52) Cooperative Patent Classification (CPC):
G01N 35/00; G01N 35/02; G01N 35/04

(86) International application number:
PCT/CN2019/123819

(87) International publication number:
WO 2021/109152 (10.06.2021 Gazette 2021/23)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Shenzhen Mindray Bio-Medical
Electronics Co., Ltd
Shenzhen, Guangdong 518057 (CN)

(72) Inventors:
• QI, Huan
Shenzhen, Guangdong 518057 (CN)
• LI, Zhaoyang
Shenzhen, Guangdong 518057 (CN)

• YE, Yi
Shenzhen, Guangdong 518057 (CN)
• YE, Bo
Shenzhen, Guangdong 518057 (CN)
• XING, Yuan
Shenzhen, Guangdong 518057 (CN)
• LUO, Wei
Shenzhen, Guangdong 518057 (CN)
• YU, Shan
Shenzhen, Guangdong 518057 (CN)
• CHEN, Qiaoni
Shenzhen, Guangdong 518057 (CN)

(74) Representative: KIPA AB
Drottninggatan 11
252 21 Helsingborg (SE)

(54) SAMPLE ANALYSIS SYSTEM AND METHOD, CELL IMAGE ANALYZER, AND STORAGE MEDIUM

(57) A sample analysis system (100), a cell image analyzer (130), a platelet detection method, and a storage medium (1702). A control apparatus (140) is communicatively connected to a blood cell analyzer (110), a smear preparation apparatus (120), the cell image analyzer (130), and a transport apparatus, and is configured to: acquire from the blood cell analyzer (110) a sample detection result of a sample to be tested (801); when determining according to the sample detection result that a platelet abnormality exists in said sample, instruct a first transmission track (150) of the transport apparatus to transport said sample to the smear preparation apparatus (120) so as to prepare a smear (21) to be tested of said blood sample (802), and instruct a second transmission track (160) of the transport apparatus to transport said smear (21) to the cell image analyzer (130) so as to photograph a cell image of said smear (21). The cell image analyzer (130) determines, according to the cell image, whether platelet aggregation exists in said sample and/or estimates the platelet count of said sample (803). Therefore, platelets in abnormal samples can be detected efficiently and automatically, and manual intervention can be reduced, thereby reducing human error.

**FIG. 1**

## Description

TECHNICAL FIELD

The application relates to the field of blood tests, and in particular to a sample analysis system, a cell image analyzer, a method for automatically detecting platelets, and a computer readable storage medium.

BACKGROUND

Blood cells are generally divided into three types: red blood cells (RBC), white blood cells (WBC), and platelets (PLT).

A platelet count is an important test item for clinical diagnosis and treatment of thrombocytopenia caused by various reasons. The platelet count refers to the number of platelets contained in a unit volume of blood. When the platelet count is less than a certain value (e.g., $20 \times 10^9$/L), it is generally considered that a platelet transfusion is required for the patient, otherwise the patient will be at risk of fatal bleeding. However, on the other hand, an unnecessary blood transfusion may lead to wastes of clinical cost and clinical risks caused by the blood transfusion, for example, an ineffective platelet transfusion, and post-transfusion purpura. Therefore, the accurate platelet count has a great clinical significance.

At present, a blood cell analyzer uses an impedance method or an optical method to count platelets in a blood sample. For a normal sample, the blood cell analyzer can accurately count platelets, but for an abnormal sample (such as a platelet aggregation sample), a platelet count result from the blood cell analyzer has a great deviation. When a clinical lab doctor determines that the platelet count result from the blood cell analyzer is abnormal, he/she needs to retest the blood sample under a microscope to confirm a platelet count and to determine whether a platelet abnormality really exists relying on human experience. This not only puts forward higher requirements for the clinical lab doctor, but also easily leads to human error and low efficiency.

SUMMARY

Embodiments of this application provide a sample analysis system, a cell image analyzer, a method, and a computer readable storage medium, which can efficiently and automatically detect platelets in an abnormal sample with less or even no manual intervention, and improve blood detection efficiency and accuracy.

A first aspect of this application provides a sample analysis system, which may include a blood cell analyzer, a smear preparation apparatus, a cell image analyzer, a transport apparatus, and a control apparatus.

The blood cell analyzer is configured to detect cells in a blood sample to obtain a blood detection result.

The smear preparation apparatus is configured to prepare a smear of the blood sample.

The cell image analyzer is configured to capture an image of cells in the smear and analyze the image.

The transport apparatus includes a first transfer track and a second transfer track, the first transfer track being configured to transport the blood sample from the blood cell analyzer to the smear preparation apparatus, and the second transfer track being configured to transport the smear from the smear preparation apparatus to the cell image analyzer.

The control apparatus is communicatively connected to the blood cell analyzer, the smear preparation apparatus, the cell image analyzer, and the transport apparatus, and is configured to perform the following operations.

A blood detection result of a blood sample to be tested is acquired from the blood cell analyzer.

When it is determined that a platelet abnormality exists in the blood sample to be tested according to the blood detection result, the first transfer track is instructed to transport the blood sample to be tested to the smear preparation apparatus, the smear preparation apparatus is instructed to prepare a smear to be tested of the blood sample to be tested, the second transfer track is instructed to transport the smear to be tested to the cell image analyzer, and the cell image analyzer is instructed to capture a cell image of the smear to be tested and analyze the cell image.

When the cell image analyzer determines that no platelet aggregation exists in the blood sample to be tested according to the cell image, the cell image analyzer estimates a platelet count of the blood sample to be tested according to the cell image.

A second aspect of this application provides a sample analysis system, which may include a blood cell analyzer, a smear preparation apparatus, a cell image analyzer, a transport apparatus, and a control apparatus.

The blood cell analyzer is configured to detect cells in a blood sample to obtain a blood detection result.

The smear preparation apparatus is configured to prepare a smear of the blood sample.

The cell image analyzer is configured to capture an image of cells in the smear and analyze the image.

The transport apparatus includes a first transfer track and a second transfer track, the first transfer track being configured to transport the blood sample from the blood cell analyzer to the smear preparation apparatus, and the second transfer track being configured to transport the smear from the smear preparation apparatus to the cell image analyzer.

The control apparatus is communicatively connected to the blood cell analyzer, the smear preparation apparatus, the cell image analyzer, and the transport apparatus, and is configured to perform the following operations.

A blood detection result of a blood sample to be tested is acquired from the blood cell analyzer.

When it is determined that a platelet abnormality exists in the blood sample to be tested according to the blood detection result, the first transfer track is instructed to transport the blood sample to be tested to the smear preparation apparatus, the smear preparation apparatus is instructed to prepare a smear to be tested of the blood sample to be tested, the second transfer track is instructed to transport the smear to be tested to the cell image analyzer, and the cell image analyzer is instructed to capture a cell image of the smear to be tested.

The cell image analyzer estimates a platelet count of the blood sample to be tested according to the cell image, and/or determines whether a platelet aggregation exists in the blood sample to be tested according to the cell image.

A third aspect of this application provides a cell image analyzer for analyzing a smear, which may include a digital image apparatus, a smear movement apparatus, and a controller.

The digital imaging apparatus has a plurality of objective lenses and a digital camera, the digital camera being configured to capture, under the objective lenses, an image of cells in a smear prepared from a blood sample to be tested.

The smear movement apparatus is configured to adjust a relative position between the digital imaging apparatus and the smear.

The controller includes a memory controlled by a processor, the memory storing instructions that may cause the processor to perform the following operations.

The smear movement apparatus is controlled to adjust the smear to a predetermined position.

The digital camera is controlled to capture, under the objective lenses, a cell image of the smear in the predetermined position.

When it is determined that no platelet aggregation exists in the blood sample to be tested according to the cell image, a platelet count of the blood sample to be tested is estimated according to the cell image.

A fourth aspect of this application provides a method for automatically detecting platelets, which may include the following operations.

A blood cell analyzer acquires a blood detection result of a blood sample to be tested.

When it is determined according to the blood detection result that a platelet abnormality exists in the blood sample to be tested, a smear preparation apparatus prepares a smear to be tested of the blood sample to be tested, and a cell image analyzer acquires a cell image of the smear to be tested.

When the cell image analyzer determines that no platelet aggregation exists in the blood sample to be tested according to the cell image, the cell image analyzer estimates a platelet count of the blood sample to be tested according to the cell image.

A fifth aspect of this application provides a method for automatically detecting platelets, which may include the following operations.

A blood detection result of a blood sample to be tested is acquired by a blood cell analyzer.

When it is determined that a platelet abnormality exists in the blood sample to be tested according to the blood detection result,

a first transfer track transports the blood sample to be tested from the blood cell analyzer to a smear preparation apparatus,

the smear preparation apparatus prepares a smear to be tested of the blood sample to be tested, and

a second transfer track transports the smear to be tested from the smear preparation apparatus to a cell image analyzer.

The cell image analyzer captures a cell image of the smear to be tested and estimates a platelet count of the blood sample to be tested according to the cell image and/or determines whether a platelet aggregation exists in the blood sample to be tested according to the cell image.

A sixth aspect of this application provides a computer readable storage medium, which may store a computer program. The computer program may include program instructions, and the program instructions may be executed by a processor to enable the processor to execute the method according to the fourth aspect or the fifth aspect of this application.

In embodiments of this application, the blood cell analyzer acquires a blood detection result of a blood sample to be tested; when the blood detection result of the blood sample to be tested indicates that a platelet abnormality exists in the blood sample to be tested, the smear preparation apparatus prepares a smear to be tested of the blood sample to be tested, and the cell image analyzer acquires a cell image of the smear to be tested; the cell image analyzer determines whether a platelet aggregation exists in the blood sample to be tested according to the cell image, and/or estimates a platelet count of the blood sample to be tested according to the cell image; or when it is determined according to the cell image that no platelet aggregation exists in the blood sample to be tested, the cell image analyzer estimates a platelet count of the blood sample to be tested. That is, in the embodiments of this application, it can be automatically determined whether a platelet abnormality exists in the blood sample to be tested according to the detection result from the blood cell analyzer. When it is determined that a platelet abnormality exists in the blood sample to be tested, the sample to be tested is automatically transported to the smear preparation apparatus to prepare the smear to be tested, and then the smear to be tested is automatically transported to the cell image analyzer for image capturing and analysis, so that the cell image analyzer automatically determines whether a platelet aggregation exists in the blood sample to be tested and estimates a platelet count of the blood to be tested. Therefore, platelets in an abnormal sample can be detected efficiently and automatically, manual intervention can be reduced or even omitted, thereby greatly reducing the burden of a clinical lab doctor and reducing human error. In addition, compared with the manual counting of platelets through a microscope, the cell image analyzer can accurately estimate the platelet count in the blood sample to be tested, and it is not necessary for the clinical lab doctor to count platelets under the microscope, which takes a long time, thereby improving the platelet counting efficiency while reducing human error.

BRIEF DESCRIPTION OF THE DRAWINGS

In order to describe the technical solutions in the embodiments of this application or the conventional art more clearly, the drawings required to be used in the embodiments or the conventional art will be simply introduced below. It is apparent that the drawings in the following descriptions are only some embodiments of this application. Those of ordinary skilled in the art may further obtain other drawings according to these drawings without creative work.

FIG. 1 is a schematic structural diagram of a sample analysis system according to an embodiment of this application.

FIG. 2 and FIG. 3 are structural perspective views of a smear preparation apparatus according to an embodiment of this application from different perspectives.

FIG. 4 is a schematic structural diagram of a cell image analyzer according to an embodiment of this application.

FIG. 5 is a schematic structural diagram of another cell image analyzer according to an embodiment of this application.

FIG. 6 is a schematic structural diagram of a smear according to an embodiment of this application.

FIG. 7 is a schematic structural diagram of a control apparatus according to an embodiment of this application.

FIG. 8 to FIG. 12 are schematic flowcharts of a method for automatically detecting platelets according to different embodiments of this application.

FIG. 13 is a schematic flowchart of a platelet counting method according to an embodiment of this application.

FIG. 14 is a grayscale histogram of a cell image according to an embodiment of this application.

FIG. 15 is a schematic structural diagram of a deep neural network according to an embodiment of this application.

FIG. 16 is a structural schematic diagram of a platelet detection apparatus according to an embodiment of this application.

FIG. 17 is a schematic structural diagram of another platelet detection apparatus according to an embodiment of this application.

DETAILED DESCRIPTION

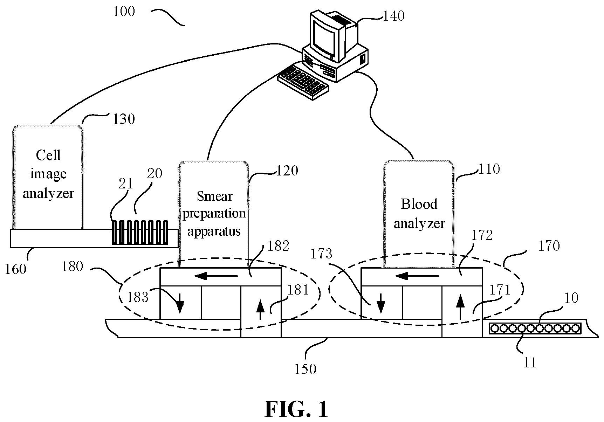

The technical solutions in the embodiments of this application are clearly and completely described in the following in conjunction with the accompanying drawings of this application. It is apparent that the described embodiments are not all embodiments but only part of embodiments of this application. All other embodiments obtained by those of ordinary skills in the art based on the embodiments in this application without creative work shall fall within the scope of protection of this application.
The specification and claims of this application and terms "first", "second", etc. in the accompanying drawings are used for distinguishing different objects rather than describing a specific sequence. In addition, terms "include" and "have" and any transformations thereof are intended to cover nonexclusive inclusions. For example, a process, method, system, product or device including a series of steps or units is not limited to the steps or units which have been listed but optionally further includes steps or units which are not listed or optionally further includes other steps or units intrinsic to the process, the method, the product or the device.
"Embodiment" mentioned in this application means that a specific characteristic, structure or characteristic described in combination with an embodiment may be included in at least one embodiment of this application. Each position where this phrase appears in the specification does not always refer to the same embodiment as well as an independent or alternative embodiment mutually exclusive to another embodiment. It is explicitly and implicitly understood by those skilled in the art that the embodiments described in this application may be combined with other embodiments.
The embodiments of this application will be described in detail below.
Reference is made to FIG. 1. FIG. 1 is a schematic structural diagram of a sample analysis system according to an embodiment of this application. As shown in FIG. 1, the sample analysis system 100 includes a blood cell analyzer 110, a smear preparation apparatus 120, a cell image analyzer 130, and a control apparatus 140.
The blood cell analyzer 110 is configured to perform blood routine examination for a sample to be tested. The smear preparation apparatus 120 is configured to prepare a smear of the blood sample. The cell image analyzer 130 is configured to capture an image of cells in the smear and analyze the image. The control apparatus 140 is communicatively connected to the blood cell analyzer 110, the smear preparation apparatus 120, and the cell image analyzer 130.

The sample analysis system 100 further includes a first transfer track 150 and a second transfer track 160. The first transfer track 150 is configured to transport a test tube stand 10 capable of holding a plurality of test tubes 11 carrying samples to be tested to the smear preparation apparatus 120 from the blood cell analyzer 110. The second transfer track 160 is configured to transport a slide basket 20 capable of carrying a plurality of prepared smears 21 to the cell image analyzer 130 from the smear preparation apparatus 120.

The control apparatus 140 is electrically connected to the first transfer track 150 and the second transfer track 160 and controls actions of the first transfer track 150 and the second transfer track 160. In some embodiments, the control apparatus 140 is electrically connected to the first transfer track 150 and the second transfer track 160 indirectly through a schedule controller (not shown).

In the embodiment of this application, the control apparatus 140 is configured to acquire a sample detection result of a sample to be tested (e.g., a blood sample) from the blood cell analyzer 110.

When it is determined according to the sample detection result that a platelet abnormality exists in the sample to be tested, the first transfer track 150 is instructed to transfer the sample to be tested (in a manner of being loaded in a sample tube) to the smear preparation apparatus 120, the smear preparation apparatus 120 is instructed to prepare a smear to be tested of the sample to be tested, the second transfer track 160 is instructed to transfer the smear to be tested to the cell image analyzer 130, and the cell image analyzer 130 is instructed to capture a cell image of the smear to be tested and to estimate a platelet count of the sample to be tested and/or determine whether a platelet aggregation exists in the sample to be tested, according to the cell image. Or, when determining according to the cell image that no platelet aggregation exists in the sample to be tested, the cell image analyzer 130 further estimates a platelet count of the sample to be tested according to the cell image, or prompts whether to estimate a platelet count of the sample to be tested according to the cell image.

In the embodiment of this application, the sample analysis system 100 can efficiently and automatically detect platelets in an abnormal sample, with manual intervention reduced or even omitted. The cell image analyzer can more accurately estimate the platelet count in the blood sample to be tested. Compared with a manner of manual counting, in the embodiment of this application, it is not necessary for clinical lab personnel to count platelets under a microscope for a long time, thereby improving the platelet counting efficiency while reducing human error.

Taking a blood sample as an example, a work flow of the sample analysis system 100 is described as follows.

First, the blood cell analyzer 110 detects a blood sample 11 to be tested on a test tube stand 10 to obtain a blood detection result of the blood sample to be tested (the blood detection result may include a platelet detection result, a red blood cell detection result, a white blood cell detection result, etc.). When the control apparatus 140 determines according to the blood detection result that the blood sample 11 to be tested on the test tube stand 10 needs to be re-tested (for example, the blood detection result of the blood sample to be tested indicates that there is a lower-than-normal platelet count in the blood sample to be tested), the control apparatus 140 instructs the first transfer track 150 to transport the test tube stand carrying the blood sample to be re-tested to the smear preparation apparatus 120, so as to prepare a smear 21. The smear preparation apparatus 120 accommodates the prepared smear 21 in the slide basket 20, and transports the slide basket 20 containing the smear 21 to the cell image analyzer 130 through the second transfer track 160, so that the cell image analyzer 130 captures a cell image of the smear and analyzes the cell image, and then estimates a platelet count of the blood sample to be tested when determining through analysis that no platelet aggregation exists in the blood sample to be tested, or directly estimates a platelet count of the blood sample to be tested.

In an embodiment of this application, as shown in FIG. 1, the sample analysis system 100 further includes a feeding mechanism 170 corresponding to the blood cell analyzer 110 and a feeding mechanism 180 corresponding to the smear preparation apparatus 120. the feeding mechanism 170 includes a loading buffer area 171, a feeding detection area 172, and an unloading buffer area 173; and the feeding mechanism 180 includes a loading buffer area 181, a feeding detection area 183, and an unloading buffer area 183.

When the sample to be tested on the test tube stand 10 needs to be transported to the blood cell analyzer 110 for detection, the test tube stand 10 is first transported to the loading buffer area 171 via the first transfer track 150, and then is transported from the loading buffer area 171 to the feeding detection area 172 to be detected by the blood cell analyzer 110. After the detection is finished, the test tube stand is unloaded from the feeding detection area 172 to the unloading buffer area 173, and finally enters the first transfer track 150 from the unloading buffer area 173.

Similarly, when a microscopic examination is needed for the sample to be tested on the test tube stand 10, firstly, the test tube stand 10 is transported to the smear preparation apparatus 120 to prepare a smear of the sample to be tested. The test tube stand 10 is first transported from the first transfer track 150 to the loading buffer area 181, and then transported from the loading buffer area 181 to the feeding detection area 182. The smear preparation apparatus 120 prepares the smear of the sample to be tested. After the smear preparation, the test tube stand is unloaded from the feeding detection area 182 to the unloading buffer area 183, and finally enters the first transfer track 150 from the unloading buffer area 183. The smear preparation apparatus 120 stores the prepared smear in the slide basket 20 and transports the slide basket 20 containing the smear to be tested to the cell image analyzer 130 through the second transfer track 160. The cell image analyzer 130 captures an image of cells in the sample on the smear to be tested and analyzes the image.

The sample analysis system 100 further includes a display (not shown) for displaying a sample detection result, which may be arranged on the blood analyzer 110, the cell image analyzer 130 or the control apparatus 140, or arranged separately. The display may include a display screen, such as a liquid crystal display screen, and an OLED display screen. The display is configured to display an analysis result of whether a platelet aggregation exists in a sample to be tested, and a platelet count of the sample to be tested.

In an embodiment of this application, the blood cell analyzer 110 is configured to perform blood routine examination on a sample to be tested, such as a blood sample, so as to obtain a sample detection result. Blood routine parameters or blood detection results may include at least one or a combination of results of white blood cell (WBC) five-classification, WBC count and morphological parameters, hemoglobin (HGB) detection results, red blood cell (RBC) and blood platelet (PLT) count and morphological parameters.

The blood cell analyzer 110 generally includes a sampling apparatus, a sample preparation apparatus, an optical detection apparatus, and a controller (not shown). The sampling apparatus has a sampling needle for collecting a blood sample and transferring the collected blood sample to the sample preparation apparatus. The sample preparation apparatus has a reaction cell and a reagent supply part. The reagent supply part stores a reagent for reacting with the blood sample and supplies a corresponding reagent to the reaction cell as needed. The sample preparation apparatus may include at least one reaction cell. The at least one reaction cell may be configured such that the blood sample from a sampling part and the reagent from the reagent supply part react to prepare a sample to be tested. The optical detection apparatus includes a light source, a flow cell, and an optical detector. Particles of a sample to be tested can flow in the flow cell, and light emitted by the light source illuminates the particles in the flow cell to generate optical information. The optical detector detects the optical information. The controller is configured to control actions of the sampling apparatus, the sample preparation apparatus and the optical detection apparatus and to acquire the optical information measured by the optical detection apparatus, so as to further obtain a blood routine examination result of the blood sample.

The blood cell analyzer 110 also includes an impedance detection apparatus (not shown). The impedance detection apparatus includes a flow cell having an aperture with electrodes. The impedance detection apparatus detects a direct current impedance generated when the particles in the sample to be tested pass through the aperture, and outputs an electrical signal reflecting information when the particles pass through the aperture. It can be understood that the blood cell analyzer 110 can detect platelets in the blood sample to be tested through an impedance detection apparatus (i.e., an impedance method) or an optical detection apparatus (i.e., an optical method) in the blood cell analyzer 110 to obtain an impedance-method-based platelet detection result or an optical-method-based platelet detection result. Moreover, the blood cell analyzer 110 may also detect platelets in the blood sample to be tested through its impedance detection apparatus and optical detection apparatus, so as to obtain an impedance-method-based platelet detection result or an optical-method-based platelet detection result. For example, when the impedance-method-based platelet detection result measured by the impedance detection apparatus of the blood cell analyzer 110 indicates that a platelet abnormality exists in the blood sample to be tested, the optical detection apparatus of the blood cell analyzer 110 is then used to detect the platelets in the blood sample to be tested. Alternatively, both the impedance detection apparatus and the optical detection apparatus of the blood cell analyzer 110 may be used to detect platelets in the blood sample to be tested.

The blood cell analyzer 110 is communicatively connected to the control apparatus 140 through its controller, so as to transmit a sample detection result to the control apparatus 140, or receive information from the control apparatus 140.

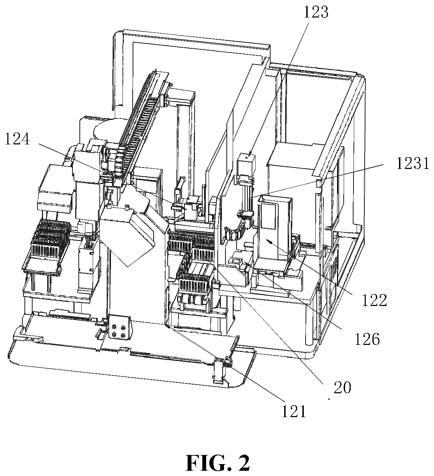

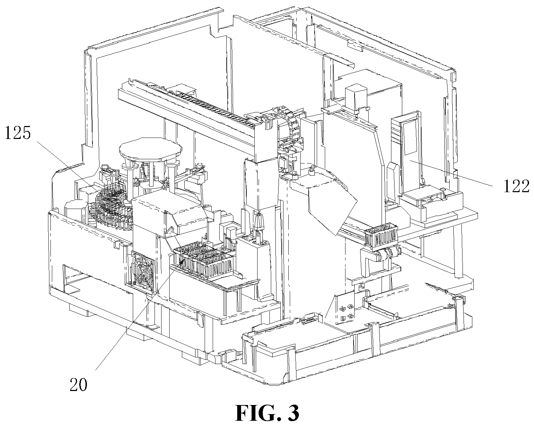

In an embodiment of this application, FIG. 2 and FIG. 3 show schematic structural diagrams of a smear preparation apparatus 120. The smear preparation apparatus 120 can be used for smear preparation of a sample such as blood and body fluid. The smear preparation apparatus 120 includes a sampling mechanism 121 for taking a sample, a slide loading mechanism 122 for moving a slide to a working line, a sample loading mechanism 123 for loading the sample onto the slide, a slide making mechanism 124 for smoothing the sample on the slide, a drying mechanism (not shown in the figure) for drying a blood film on the slide, and a staining mechanism 125 for staining the slide. The smear preparation apparatus 120 also includes a controller (not shown) configured to control operations of various mechanisms of the smear preparation apparatus 120.

The smear preparation apparatus 120 is communicatively connected to the control apparatus 140 through its controller, so as to receive a slide making instruction from the control apparatus 140 or send data to the control apparatus 140. In some embodiments, the controller of the smear preparation apparatus 120 may also be directly communicatively connected to the controller of the blood cell analyzer 110, so as to obtain a sample analysis result of a sample to be tested from the blood cell analyzer 110, thereby determining whether a slide of the sample to be tested needs to be made.

After the smear preparation apparatus 120 receives the slide making instruction from the control apparatus 140 through its controller, the controller controls the sampling mechanism 121 to extract a sample, for example, to extract a sample using the sampling apparatus in the sampling mechanism 121, such as a sampling needle 1211, and to transfer the sample extracted by the sampling mechanism 121 to the sample loading mechanism 123 through a pipeline not shown; control the slide loading mechanism 122 to pick up a blank slide, and load the blank slide to a working position, so as to facilitate a blood drop operation; control the sample loading mechanism 123 to drop a sample onto the blank slide at the working position; and control the slide making mechanism 124 to push the sample on the blank slide into a shape of a sample film. After the slide making action is completed, the controller of the smear preparation apparatus 120 may further control the drying mechanism to dry the sample film on the slide to stabilize morphology of the sample film; and may further control the staining mechanism 125 to stain the sample film on the slide.

The smear preparation apparatus 120 in the embodiment of this application may execute an automatic smear preparation procedure to realize automatic preparation of smears, thereby improving the efficiency of blood smear preparation.

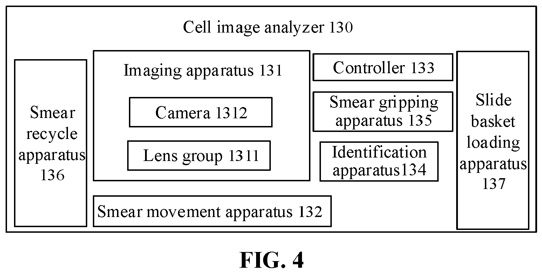

In an embodiment of this application, the cell image analyzer 130 may also be referred to as a reader, a digital cell image analysis system, or a digital microscope. As shown in FIG. 4, the cell image analyzer 130 includes an imaging apparatus 131, a smear moving apparatus 132, and a controller 133. The imaging apparatus 131 includes a camera 1312 and a lens group 1311 and is configured to capture an image of cells in a sample smeared on a smear, the smear moving apparatus 132 is configured to move the smear relative to the imaging apparatus 131, so that the imaging apparatus 131 captures a cell image of a specific region of the smear.

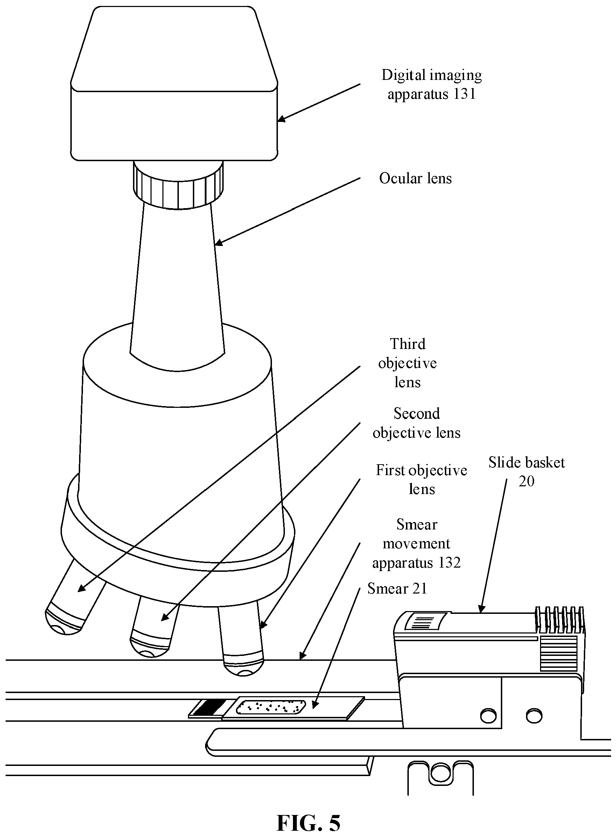

As shown in FIG. 5, the lens group 1311 may include a first objective lens and a second objective lens. The first objective lens may be, for example, a 10x objective lens, and the second objective lens may be, for example, a 100x objective lens. The lens group 1311 may further include a third objective lens, and the third objective lens may be, for example, a 40x objective lens. The lens group 1311 may further include an ocular lens, for example.

The cell image analyzer 130 further includes an identification apparatus 134, a slide gripping apparatus 135 and a smear recovery apparatus 136. The identification apparatus 134 is configured to identify identity information of a smear, the slide gripping apparatus 135 is configured to grip the smear from the identification apparatus 134 to the smear moving apparatus 132 for detection, and the smear recycle apparatus 136 is configured to hold the detected smear.

The cell image analyzer 130 further includes a slide basket loading apparatus 137 for loading a slide basket containing a smear to be tested. The slide gripping apparatus 135 is further used for gripping a slide to be tested in the slide basket loaded on the slide basket loading apparatus 137 to the identification apparatus 134 for information identification. The slide basket loading apparatus 137 is connected to the second transfer track 160 so that the smear prepared by the smear preparation apparatus 120 can be transported to the cell image analyzer 130.

The controller 133 of the cell image analyzer 130 is configured to control actions of the imaging apparatus 131, the smear moving apparatus 132, the identification apparatus 134 and/or the slide gripping apparatus 135, and the like, and analyze a cell image of the smear. In addition, the cell image analyzer 130 is communicatively connected to the control apparatus 140 through its controller, so as to receive an instruction for image capturing and analysis of the smear to be tested from the control apparatus 140, or transmit detection data of the cell image analyzer 130 to the control apparatus 140. In other embodiments, the controller 133 of the cell image analyzer 130 may also be directly communicatively connected to the controller of the smear preparation apparatus 120 and/or the blood cell analyzer 110 to obtain a capturing instruction.

In an embodiment of this application, the controller 133 of the cell image analyzer 130 is configured to:

control the smear movement apparatus 132 to adjust a smear prepared from a sample to be tested to a predetermined position;

control the digital camera 1312 to capture, under the objective lenses, a cell image of the smear at the predetermined position; and

when determining according to the cell image that no platelet aggregation exists in the blood sample to be tested, estimate a platelet count of the blood sample to be tested according to the cell image, or prompt whether to estimate a platelet count of the blood sample to be tested according to the cell image.

A specific method by which the cell image analyzer 130 estimates the platelet count according to the cell image will be described in detail below.

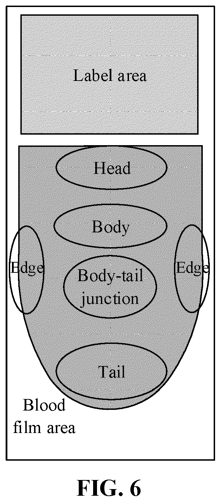

In an embodiment of this application, the cell image analyzer 130 is further configured to, when a platelet abnormality exists in the sample to be tested, capture a cell image of a specified region of the smear prepared from the sample to be tested, the specified region including at least one of a body-tail junction region, edge regions on two sides, or a tail region of the smear to be tested. As shown in FIG. 6, a smear includes a label area and a blood film area. The identification information or other marking information of a sample is printed in the label area, and the sample to be tested is smeared on the blood film area. The sample is smeared on the blood film area from the head of the blood film area to the tail of the blood film area. A platelet aggregation is usually more likely to be found in edge regions of the blood film on both sides.

In an embodiment of this application, the cell image analyzer 130 is further configured to, when a platelet abnormality exists in the blood sample to be tested, determine according to the cell image of the smear prepared from the sample to be tested whether morphology of platelets in the blood sample to be tested is abnormal.

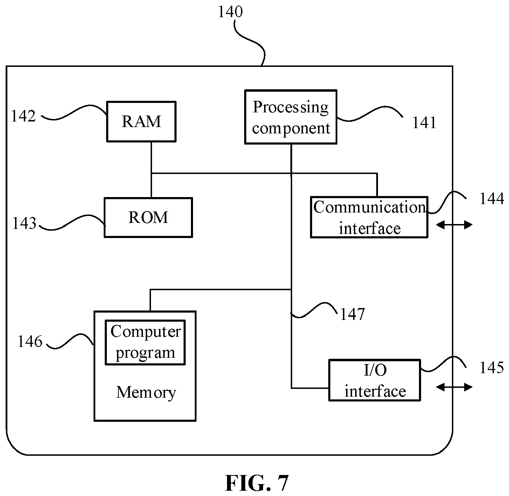

In an embodiment of this application, as shown in FIG. 7, the control apparatus 140 at least includes: a processing component 141, a random access memory (RAM) 142, a read-only memory (ROM) 143, a communication interface 144, a memory 146 and an I/O interface 145. The processing component 141, RAM 142, ROM 143, communication interface 144, memory 146 and I/O interface 145 communicate through a bus 147.

The processing component may be a central processing unit (CPU), a graphics processing unit (GPU) or other chips having computing capabilities.

The memory 146 is installed with various computer programs, such as an operating system and an application program, which are executed by the processing component 141, and data necessary for executing the computer programs. In addition, in a sample detection process, if necessary, all locally stored data can be stored in the memory 146.

The input/output (I/O) interface 145 is composed of, one or more serial interfaces such as, a universal serial bus (USB) interface, an Institute of Electrical and Electronics Engineers (IEEE) 1394 interface or an RS-232C interface, one or more parallel interfaces such as a small computer system interface (SCSI), an integrated drive electronics (IDE) interface, or an IEEE1284 interface, and an analog signal interface consisting of a digital/analog (D/A) converter and an analog/digital (analog/digital, A/D) converter, etc.. An input device composed of a keyboard, a mouse, a touch screen or other control buttons is connected to the I/O interface 145, and a user can directly input data to the control apparatus 140 by using the input device. In addition, the I/O interface 145 can also be connected to a display having a display function, such as a liquid crystal screen, a touch screen, and an LED display screen. The control apparatus 140 can output processed data as image display data to the display for displaying, such as analysis data, and instrument operating parameters.

The communication interface 144 is an interface that may use any communication protocol currently known. The communication interface 144 is in communication with the outside world through a network. The control apparatus 140 can transmit data with any device connected through the network with a certain communication protocol through the communication interface 144.

In the embodiment of this application, the controllers of the blood cell analyzer 110, the smear preparation apparatus 120, and the cell image analyzer may also have structures similar to those of the control apparatus 140, which will not be repeated here.

In the embodiment of this application, the control apparatus 140 may be independent of the controllers of the blood cell analyzer 110, the smear preparation apparatus 120 and the cell image analyzer, or may be integrated into one of the controllers of the blood cell analyzer 110 and the smear preparation apparatus 120 and the cell image analyzer, and may also include the above-mentioned controllers of the blood cell analyzer 110, the smear preparation apparatus 120, and the cell image analyzer.

A method for automatically detecting platelets according to an embodiments of this application is described below. The method according to the embodiment of this application can be applied to the above-mentioned sample analysis system 100, and can especially be implemented by the control apparatus 140.

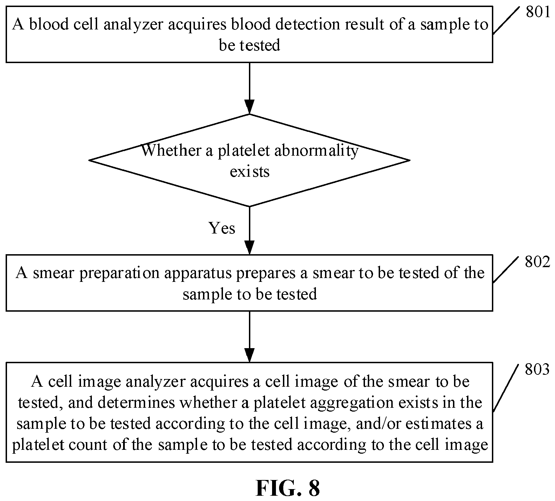

Reference is made to FIG. 8. FIG. 8 is a schematic flowchart of a method for automatically detecting platelets according to different embodiments of this application. The method includes the following steps.

At S801, a blood detection result of a sample to be tested is acquired by the blood cell analyzer 110.

At S802, when determining that a platelet abnormality exists in the sample to be tested according to the blood detection result, a smear preparation apparatus 120 prepares a smear to be tested of the sample to be tested.

At S803, a cell image analyzer 130 acquires a cell image of the smear to be tested, and determines whether a platelet aggregation exists in the sample to be tested according to the cell image, and/or estimates a platelet count of the sample to be tested according to the cell image.

In an embodiment of this application, the control apparatus 140 establishes a communication connection with the blood cell analyzer 110, the smear preparation apparatus 120, and the cell image analyzer 130 respectively. The specific flow steps of the method for automatically detecting platelets mentioned above are as follows: after the blood cell analyzer 110 acquires a blood detection result of the sample to be tested, for example, a blood sample to be tested, the blood cell analyzer sends the blood detection result to the control apparatus 140; when the control apparatus 140 determines that a platelet abnormality exists in the sample to be tested according to the blood detection result, the control apparatus 140 sends a smear preparation instruction to the smear preparation apparatus 120 and a smear capturing and analysis instruction to the cell image analyzer 130, so that the smear preparation apparatus 120 automatically prepares the smear to be tested of the sample to be tested,

and the cell image analyzer 130 acquires and analyzes the cell image of the smear to be tested. The cell image analyzer 130 then automatically determines whether a platelet aggregation exists in the blood sample to be tested according to the cell image; or estimates a platelet count of the blood sample to be tested according to the cell image; or determines whether a platelet aggregation exists in the blood sample to be tested according to the cell image, and estimates a platelet count of the blood sample to be tested or prompts whether to estimate a platelet count of the blood sample to be tested,.

In other embodiments of this application, the control apparatus 140 is integrated into one of the blood cell analyzer, the smear preparation apparatus, and the cell image analyzer. For example, in one embodiment, the control apparatus 140 is integrated in the blood cell analyzer, and the blood cell analyzer establishes a communication connection with the smear preparation apparatus and the cell image analyzer, respectively. The specific flow steps of the method for automatically detecting platelets mentioned above are as follows: after the blood cell analyzer 110 obtains the blood detection result of the blood sample to be tested, if it is determined that a platelet abnormality exists in the blood sample to be tested according to the blood detection result, the blood cell analyzer 110 sends a smear preparation instruction to the smear preparation apparatus 120 and sends a smear capturing and analysis instruction to the cell image analyzer 130, so that the smear preparation apparatus 120 automatically prepares the smear to be tested of the sample to be tested and the cell image analyzer 130 acquires and analyzes a cell image of the smear to be tested. The cell image analyzer 130 then automatically determines whether a platelet aggregation exists in the blood sample to be tested according to the cell image and/or estimates a platelet count of the blood sample to be tested according to the cell image.

Further, when it is determined that no platelet abnormality exists in the sample to be tested according to the sample detection result, it is not necessary to perform smear preparation and smear capturing for the sample to be tested. At this point, the detection of the sample to be tested by the blood analysis system can be ended, or the sample to be tested can be transferred to other analyzers of the sample analysis system for detection and analysis.

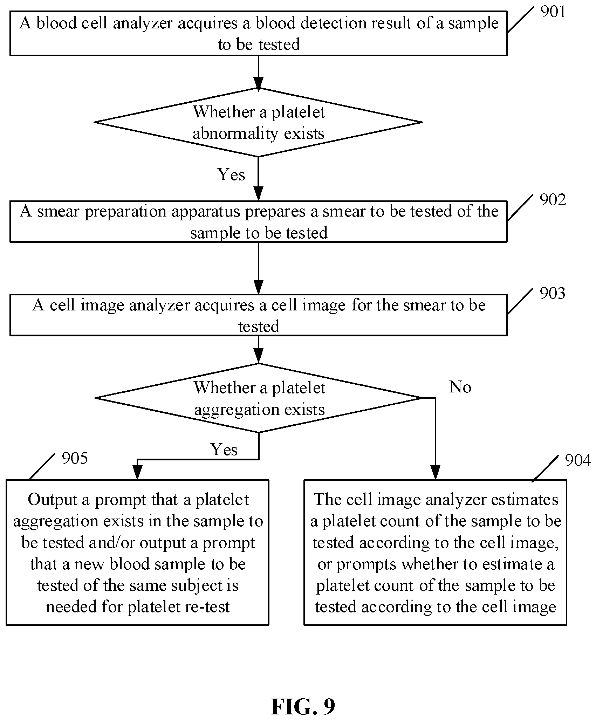

In an embodiment of this application, as shown in FIG. 9, FIG. 9 is a schematic flowchart of a method for automatically detecting platelets according to different embodiments of this application. The method includes the following steps.

At S901, a blood detection result of a sample to be tested is acquired by the blood cell analyzer 110.

At S902, when it is determined that a platelet abnormality exists in the sample to be tested according to the blood detection result, a smear preparation apparatus 120 prepares a smear to be tested of the sample to be tested.

At S903, a cell image analyzer 130 acquires a cell image of the smear to be tested.

At S904, when the cell image analyzer 130 determines that no platelet aggregation exists in the sample to be tested according to the cell image, the cell image analyzer 130 estimates a platelet count of the sample to be tested according to the cell image, or prompts whether to estimate a platelet count of the blood sample to be tested according to the cell image.

In the embodiment of this application, when the cell image analyzer 130 determines that no platelet aggregation exists in the blood sample to be tested according to the cell image, the cell image analyzer 130 further estimates a platelet count of the blood sample to be tested according to the cell image. The cell image analyzer 130 may automatically estimate the platelet count of the sample to be tested, and may also estimate the platelet count of the sample to be tested semi-automatically according to a manual count value from a user.

In other embodiments, the cell image analyzer 130 may also prompt that no platelet aggregation exists in the sample to be tested and prompt the user to choose to count the platelets in the sample to be tested. Further, the cell image analyzer 130 may output a prompt that the user can choose to perform manual counting or automatic counting. When the user chooses automatic counting, the cell image analyzer 130 automatically estimates a platelet count of the sample to be tested according to the cell image. When the user chooses manual counting, the cell image analyzer 130 prompts the user to input the manual count after receiving a manual counting instruction, so that the cell image analyzer 130 can further estimate a platelet count of the sample to be tested. A specific platelet counting method will be described in detail below.

Further, the method as shown in FIG. 9 also includes S905 that when the cell image analyzer 130 estimates that a platelet aggregation exists in the blood sample to be tested according to the cell image, it outputs a prompt that a platelet aggregation exists in the blood sample to be tested. Further, in such a case, the method further includes that a prompt of platelet re-test for a new blood sample to be tested of a same subject is output, that is, acquiring a new sample to be tested from the same subject, and transporting the new sample to be tested to the blood cell analyzer 110 for re-test, or to the smear preparation apparatus 120 to prepare a new smear to be tested, and then transporting the smear to the cell image analyzer 130 for image capturing and analysis.

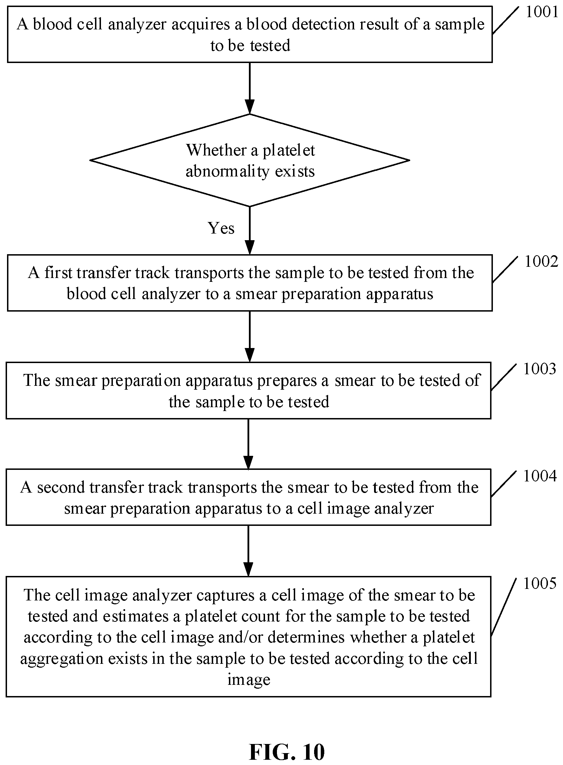

In an embodiment of this application, as shown in FIG. 10, FIG. 10 is a schematic flowchart of a method for automatically detecting platelets according to an embodiment of this application. The method includes the following steps.

At S1001, a blood detection result of a sample to be tested is acquired by the blood cell analyzer 110.

When it is determined that a platelet abnormality exists in the sample to be tested according to the blood detection result, S1002 is performed.

At S1002, a first transfer track 150 transports the sample to be tested from the blood cell analyzer 110 to a smear preparation apparatus 120.

At S1003, the smear preparation apparatus 120 prepares a smear to be tested of the sample to be tested.

At S1004, a second transfer track 160 transports the smear to be tested from the smear preparation apparatus 120 to a cell image analyzer 130.

At S1005, the cell image analyzer 130 captures a cell image of the smear to be tested and estimates a platelet count of the sample to be tested according to the cell image and/or determines whether a platelet aggregation exists in the sample to be tested according to the cell image.

In an embodiment of this application, the sample detection result of the blood cell analyzer 110 of the sample to be tested includes at least one of a platelet detection result or a red blood cell detection result. The platelet detection result includes at least one of a platelet count or a platelet concentration, a platelet histogram, a platelet scatter diagram, a platelet aggregation prompt, or a platelet size, detected by the blood cell analyzer 110, of the sample to be tested. The red blood cell detection result includes at least one of a small red blood cell detection result or a red blood cell fragment detection result, detected by the blood cell analyzer 110, of the sample to be tested.

In the embodiment this application, platelet abnormalities include a low platelet count, a high platelet count, an abnormal platelet histogram/scatter diagram, a platelet aggregation, the presence of a certain number of giant platelets, the presence of a certain number of microcytes, and the presence of a certain number of red blood cell fragments, and the like. Microcytes refer to red blood cells with a diameter smaller than normal red blood cells (7-9 um). Giant platelets refer to platelets with a diameter greater than 7 um. Large platelets are platelets with a diameter equal to 3-6 um, and normal platelets are 1-3 um in diameter. Therefore, microcytes may interfere with a platelet count, causing high platelet count, and giant platelets may cause a low count. A blood cell counting instrument usually uses an impedance method to count platelets. When there are many microcytes or red blood cell fragments in a blood sample, because the microcytes and red blood cell fragments are similar in size to platelets, it is easy to mistakenly identify the microcytes and red blood cell fragments as platelets, resulting in falsely high platelet count, which leads to a false clinical diagnoses. However, when there are many large platelets in the blood, because large platelets are similar in size to red blood cells, it is easy to mistakenly identify large platelets as red blood cells, resulting in an inaccurate platelet count. In addition, a platelet aggregation is also likely to cause falsely low platelet count, which affects clinical judgment. In these cases, it is usually necessary to further confirm the presence of a platelet abnormality in the blood sample by means of the cell image analyzer, especially to confirm whether a platelet aggregation or low platelet count exists in the blood sample.

In this regard, it indicates that a platelet abnormality exists in the sample to be tested if at least one of the following conditions occurs: a platelet count detected by the blood cell analyzer 110 exceeds a preset value range; the blood analyzer 110 prompts that a platelet aggregation exists in the sample to be tested; the blood cell analyzer 110 detects that a certain number of giant platelets exist in the sample to be tested; the blood cell analyzer 110 detects that a certain number of microcytes exist in the sample to be tested; the blood cell analyzer 110 detects that a certain amount of red blood cell fragments exist in the sample to be tested.

In the embodiment of this application, the platelet count exceeds the preset value range, which means that the platelet count is not within the preset value range. For example, the preset value range is $100 \times 10^9$ to $1000 \times 10^9$, if the number of platelets in the blood sample to be tested is less than $100 \times 10^9$, or is greater than $1000 \times 10^9$, it is considered that there is a platelet abnormality.

In an embodiment of this application, the blood cell analyzer 110 uses an impedance method or an optical method to detect a sample to be tested to obtain a sample detection result. In the impedance method, platelets are differentiated based on a difference between a platelet volume and a red blood cell volume. However, when red blood cell fragments, microcytes, or large platelets are present in the sample, the impedance-based detection may have a great deviation. In the optical method, platelets and red blood cells are distinguished based on a scattered light intensity and/or a fluorescence intensity generated when being illuminated by light. It is generally considered that the detection based on the optical method is more accurate than that based on the impedance method, but detection cost of the optical method is higher than that of the impedance method. In some cases, for cost reasons, some blood cell analyzers may not be equipped with an optical-method based apparatu, and cannot use the optical method for detection. In the embodiment of this application, the optical method can be used to detect the sample to be tested if accuracy is preferred, and the impedance method can be used to detect the sample to be tested if cost is preferred.

In an embodiment of this application, the blood cell analyzer 110 uses the impedance method and the optical method to detect a sample to be tested to obtain a sample detection result. In the embodiment of this application, generally, the detection based on the optical method is more accurate than the impedance method, but in some cases (for example, when the number of platelets is small and scattered), the accuracy of the optical method may be lower, and may be lower than that of the impedance method. Therefore, in the embodiment of this application, both the two methods are used for detection, and if there is no abnormality in detection results of the two methods, it is determined that the detection results are normal. If the detection result of any one of the methods is abnormal, it is determined that the detection result is abnormal. The embodiment of this application can improve the detection reliability of the sample detection result.

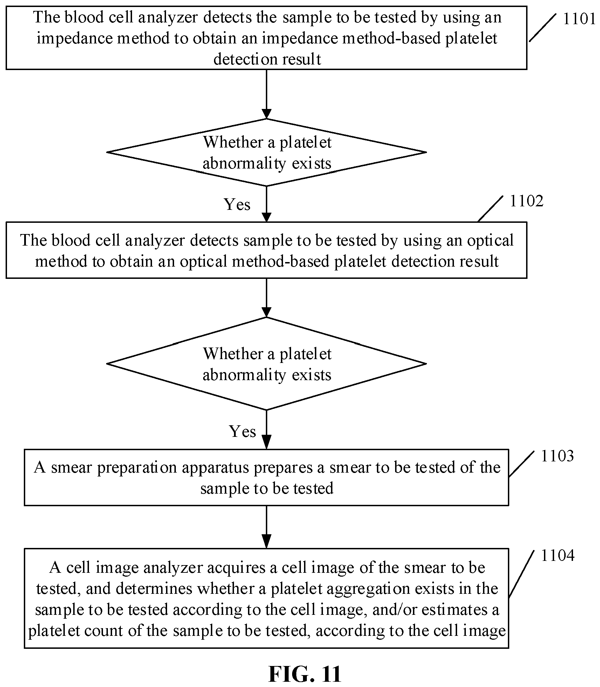

In an embodiment of this application, as shown in FIG. 11, the process for the blood cell analyzer 110 to obtain a sample detection result of a sample to be tested include the following operations.

At S1101, the blood cell analyzer 110 detects the sample to be tested by using the impedance method, to obtain an impedance method-based platelet detection result.

At S 1102, when the impedance method-based platelet detection result indicates that a platelet abnormality exists in the sample to be tested, the blood cell analyzer detects the blood sample to be tested by using the optical method to obtain an optical method-based platelet detection result, herein the blood detection result includes the impedance method-based platelet detection result and the optical method-based platelet detection result.

In the embodiment of this application, the impedance method is used for detection first. If the detection result of the impedance method is abnormal, the optical method is further used for detection. In the embodiment of this application, both the detection cost and the detection accuracy are taken into consideration in the process of detecting the blood sample to be tested by the blood cell analyzer.

For other steps S1103 and S1104 of the method shown in FIG. 11, reference may be made to S802 and S803 of the method shown in FIG. 8, which will not be repeated here.

In an embodiment of this application, the method further includes: the cell image analyzer 130 determines whether morphology of platelets in the blood sample to be tested is abnormal according to the cell image. In the embodiments of this application, the abnormal morphology of platelets may include: large platelets and giant platelets. Large platelets are platelets with a diameter equal to 3-6 um, and giant platelets refer to platelets with a diameter greater than 7 um. If a ratio of large platelets (the ratio of large platelets refers to a ratio of large platelets to total platelets) is high, it may indicate that a mechanism for platelets to form microplatelets is hindered and the maturity is reduced, which can be seen in essential thrombocythemia. If the ratio of large platelets is low, it indicates that the maturity of platelets is high. If giant platelets are present, there may be giant platelet syndrome caused by platelet membrane defects.

In an embodiment of this application, the method further includes: an analysis result of whether a platelet aggregation exists in the sample to be tested is output and/or a platelet count of the sample to be tested is output. An analysis result of the platelet aggregation includes a platelet aggregation analysis result of the sample to be tested from the cell image analyzer 130, and further includes a platelet aggregation analysis result of the sample to be tested from the blood cell analyzer 110. The platelet count includes a platelet count of the sample to be tested from the cell image analyzer 130, and further includes a platelet count of the sample to be tested from the blood cell analyzer 110.

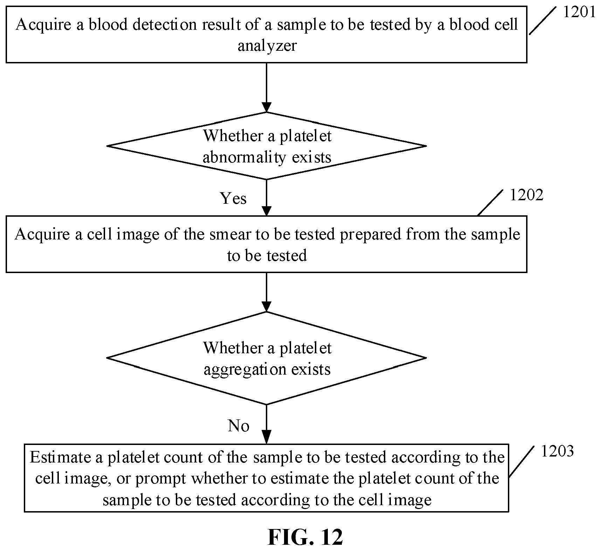

The embodiment of this application also provides another method for detecting platelets, as shown in FIG. 12, the method includes the following steps.

At S1201, a blood detection result of a sample to be tested is acquired from a blood cell analyzer.

At S1202, when the sample detection result of the sample to be tested indicates that a platelet abnormality exists in the sample to be tested, a cell image of the smear to be tested prepared from the sample to be tested is acquired.

At S1203, when it is determined according to the cell image that no platelet aggregation exists in the sample to be tested, a platelet count of the sample to be tested is estimated according to the cell image, or whether to estimate the platelet count of the sample to be tested according to the cell image is prompted.

In an embodiment of this application, regardless of whether a platelet aggregation exists in the sample to be tested, a platelet count of the sample to be tested can be estimated directly according to the cell image.

The following describes a method for estimating a platelet count of the sample to be tested according to the cell image in the embodiment of this application. In an embodiment of this application, the cell image analyzer 130 may automatically estimate a platelet count according to the platelet aggregation result, or may estimate a platelet count in response to a user instruction after prompting the user.

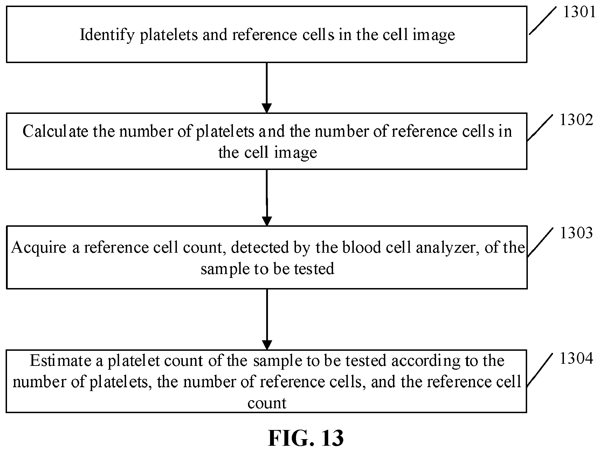

In an embodiment of this application, as shown in FIG. 13, the step that the cell image analyzer 130 estimates a platelet count in the sample to be tested according to the cell image includes the following operations.

At S1301, platelets and reference cells in the cell image are identified.

At S1302, a number of the platelets and a number of the reference cells in the cell image are calculated.

At S1303, a reference cell count, detected by the blood cell analyzer, of the sample to be tested is acquired.

At S1304, a platelet count of the sample to be tested is estimated according to the number of the platelets, the number of the reference cells, and the reference cell count.

In an embodiment of this application, when the number of platelets and the number of reference cells in the cell image and the count of reference cells detected by the blood cell analyzer 110 of the sample to be tested are acquired, a ratio of the number of platelets to the number of reference cells in the cell image can be obtained, a platelet count of the sample to be tested can be estimated by multiplying the ratio of the number of platelets in the cell image to the number of reference cells by a reference cell count of the sample to be tested. That is, the platelet count of the sample to be tested can be estimated by the following formula:

$$N_{PLT} = \frac{M_{PLT}}{M_{RFBC}} \bullet N_{RFBC}$$

$N_{PLT}$ is the platelet count to be estimated, $N_{RFBC}$ is the reference cell count detected by the blood cell analyzer 110 in the sample to be tested, $M_{PLT}$ is the number of platelets in the cell image, and $M_{RFBC}$ is the number of reference cells in the cell image.

In this embodiment of this application, when the obtained number of reference cells does not meet a condition, the cell image analyzer 130 may continue to acquire a cell image of another region of the smear to be tested, so as to increase the statistical magnitude , thereby more accurately estimating the platelet count of the sample to be tested according to the cell image

In an embodiment of this application, the platelets and the reference cells in the cell image are identified by using an image segmentation method or a deep learning method.

In an embodiment of this application, in S1301, a cell region in the cell image is identified on the basis of feature differences between cells and a background in the cell image; cells in the cell region are classified on the basis of feature differences between the different cells to identify a platelet region and a reference cell region in the cell region; correspondingly, in S1302, statistical analysis is performed on the number of the number of platelets in the platelet area and the number of reference cells in the reference cell area.

In an embodiment of this application, the feature difference between the cells and the background in the cell image may include a grayscale difference and a difference in specific color space components. For example, the cell region and the background region in the cell image can be determined according to a grayscale histogram of the cell image.

For example, the cell image analyzer may acquire a grayscale histogram of the cell image, and identify the cell region in the cell image according to the grayscale difference between the cell region and the background region in the grayscale histogram.

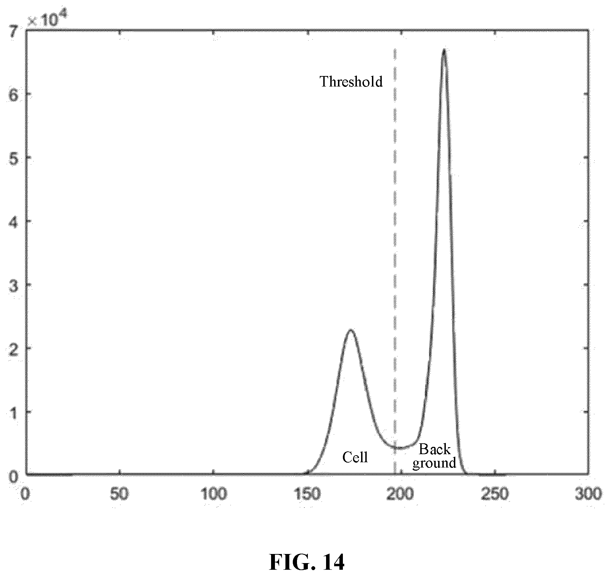

Specifically, reference is made to FIG. 14. FIG. 14 is a grayscale histogram of a cell image disclosed in an embodiment of this application. As shown in FIG. 14, the horizontal ordinate of the grayscale histogram is a grayscale value of a pixel of the cell image, and the horizontal ordinate is the number of pixel points corresponding to the grayscale value. The gray value of the cell area ranges from 100 to 200, and the gray value of the background ranges from 200 to 255. The cell image analyzer may determine a region in which the gray values of the pixels of the cell image are between 100 and 200 as a cell region, and a region in which the gray values of the pixels of the cell image are between 200 to 255 as a background region.

In an embodiment of this application, on the basis of an image segmentation method for edge detection, and according to a significant difference in color and brightness between the cells and the background, that is, there is sharp edges, the cell image analyzer can detect edges of the cells by using the gradients, thereby realizing the separation of the cells from the background.

In an embodiment of this application, a specific color space includes one of a red green blue (RGB) color space, a hue saturation value (HSV) color space, and a hue saturation intensity (HSI) color space, a Lab color space, a luminance chrominance (YUV) color space, and a luminance chrominance blue chrominance red YCbCr color space. A component of the specific color space includes any component in the RGB color space, any component in the HSV color space, any component in the HSI color space, any component in the Lab color space, any component in the YUV color space, or any component in the YCbCr color space.

For example, when reference cells are red blood cells, the cell image analyzer may identify the red blood cells and platelets based on a difference in S-components of the cell image in the HSI color space. For example, for 8-bit HSI, the S-components of platelets and nucleated cells (such as white blood cells) are generally in a range of 150 to 255, and the S-component of red blood cells is generally in a range of 0 to 150. A red blood cell region in the cell image may be differentiated from a first region containing platelets and white blood cells according to the sizes of the S-components in the cell image. The cell image analyzer then differentiates a platelet region and a white blood cell region according to the size of a connected region in the first region.

The connected region includes an eight-connected region or a four-connected region. The eight-connected region refers to a combination of moving from each pixel in the region to any pixel in the region without going out of the region in eight directions, namely up, down, left, right, upper left, upper right, lower left, and lower right. The four-connected area refers to a combination of moving from each pixel in the region to any pixel in the area without going out of the region in four directions, namely up, down, left, and right.

In general, a diameter of white blood cell nuclei is greater than that of platelets. The cell image analyzer may differentiate white blood cells and platelets based on cell sizes of the white blood cell nuclei and platelets.

In the embodiment of this application, the cell image analyzer classifies cells in the cell region based on the feature difference of different cells by using one of a support vector machine method, an artificial neural network method or a Bayesian method, to identify a platelet region and a reference cell region in the cell region.

In the embodiment of this application, for example, the reference cells being red blood cells is taken as an example. After a multi-connected region in a red blood cell region is filled, the cell image analyzer 130 can perform statistical analysis on the number of the single-connected regions in the red blood cell region, so as to obtain the number of red blood cells in the cell image. The cell image analyzer 130 performs statistical analysis on the number of platelet connected regions in the platelet region, so as to obtain the number of platelets in the cell image of the specified region.

In the embodiment of this application, a single-connected region is defined as follows: D is set as a region, if the interior of any simple closed curve in D belongs to D, then D is called a single-connected region, and the single-connected region may also be described as follows: a region enclosed by any closed curve in D contains only the points in D. More generally, a single-connected region is a region without a "hole". The definition of a multi-connected region is as follows: D is set as a region, if there is a simple closed curve belonging to D, and the interior of the simple closed curve does not belong to D, then D is called a multi-connected region. More generally, a multi-connected region is a region with a "hole".

Optionally, if the reference cells include red blood cells, the cell image analyzer 130 performs statistical analysis on the number of the platelets in the platelet region, and performs statistical analysis on the number of the red blood cells in the red blood cell region. If the reference cells include white blood cells, the cell image analyzer 130 performs statistical analysis on the number of the platelets in the platelet region, and performs statistical analysis on the number of the corresponding white blood cells in the white blood cell region. If the reference cells include a combination of red blood cells and white blood cells, the cell image analyzer 130 performs statistical analysis on the number of the platelets in the platelet region, performs statistical analysis on the number of the red blood cells in the red blood cell region, and c performs statistical analysis on the number of the corresponding white blood cells in the white blood cell region.

Optionally, the cell image analyzer 130 performs tatistics of the number of the platelets in the platelet region, which may specifically include the following steps.

Statistical analysis is performed on the number of connected regions in the platelet region, and the number of connected regions in the platelet region is taken as the number of platelets in the platelet regions.

Optionally, the cell image analyzer 130 performs statistical analysis on the number of the reference cells in the reference cell region, which may specifically include the following steps.

If the reference cells include red blood cells, the multi-connected region in the red blood cell region is subjected to hole filling to form a single-connected region, and the number of reference cells in the reference cell region is determined according to a parameter of the single-connected region in the red blood cell region.

If the reference cells include white blood cells, statistical analysis is performed on the number of the connected regions in the white blood cell region, and the number of connected regions in the white blood cell region is used as the number of reference cells in the reference cell region.

If the reference cell includes a combination of red blood cells and white blood cells, statistical analysis is performed on the number of the connected regions in the white blood cell region, and the number of white blood cells in the reference cell region is determined according to the number of connected regions in the white blood cell region. The multi-connected region is subjected to hole filling to form a single-connected region, and the number of red blood cells in the reference cell region is determined according to the parameter of the single-connected region in the red blood cell region. The sum of the number of white blood cells in the reference cell region and the number of red blood cells in the cell region is taken as the number of reference cells in the reference cell region, or the number of white blood cells in the reference cell region and the number of red blood cells in the reference cell region are respectively taken as the number of reference cells in the reference cell region.

Optionally, the parameter of the single-connected region includes the number of the single-connected regions. The cell image analyzer determines the number of reference cells in the reference cell region according to the parameter of the single-connected region in the red blood cell region, including the following operation.

Statistical analysis is performed on the number of single-connected regions in the red blood cell region, and the number of single-connected regions in the red blood cell region is used as the number of the reference cells in the reference cell region.

The operation that the cell image analyzer determines the number of red blood cells in the reference cell region according to the parameter of the single-connected region in the red blood cell region, includes the following operation.

Statistical analysis is performed on the number of single-connected regions in the red blood cell region, and the number of single-connected regions in the red blood cell region is used as the number of red blood cells in the reference cell region.

The embodiment of this application can be applied to the situation where there is no influence of other impurities (for example, cytoplasm of white blood cells, a transparent region of platelets) in the red blood cell region, and it is only necessary to count the single-connected regions in the red blood cell region to accurately perform statistical analysis on the number of the red blood cells in the reference cell region.

Optionally, the parameter of the single-connected region includes the number of the single-connected regions and the area of the single-connected regions. The operation that the cell image analyzer determines the number of reference cells in the reference cell region according to the parameter of the single-connected region in the red blood cell region, includes the following operation.

Statistical analysis is performed on the number of the single-connected regions of which the area in the red blood cell region is within a preset area threshold interval, and the number of single-connected regions of which area in the red blood cell region is within a preset area threshold interval is used as the number of reference cells in the reference cell region.

The operation that the cell image analyzer determines the number of red blood cells in the reference cell region according to the parameter of the single-connected region in the red blood cell region, includes the following operation.

Statistical analysis is performed on the number of single-connected regions of which the area in the red blood cell region is within a preset area threshold interval, and the number of single-connected regions of which the area in the red blood cell region is within a preset area threshold interval is used as the number of red blood cells in the reference cell region.

In the embodiment of this application, when there is an influence from impurities in the red blood cell region, for example, when the cytoplasm of white blood cells exists in the red blood cell region, after the connected regions formed by the cytoplasm of white blood cells are filled, single-connected-regions may also be formed. If the area of the single-connected regions is not considered, these single-connected regions may affect a result of the count of red blood cells.

Generally, the area of the single-connected regions formed by the cytoplasm of white blood cells is larger than that formed by red blood cells, and the area of the single-connected regions formed by the transparent region of platelets is smaller than that formed by red blood cells. A preset area threshold range can be set, the area of the single-connected region formed by red blood cells falls within the preset area threshold range, the area of the single-connected region formed by the cytoplasm of white blood cells does not fall within the preset area threshold range , and the area of the single-connected region formed by the transparent region of platelets does not fall within the preset area threshold range.

In an embodiment of this application, when the reference cells include a combination of red blood cells and white blood cells, the cell image analyzer performs statistical analysis on the number of the red blood cells in the red blood cell region, performs statistical analysis on the number of the white blood cells in the white blood cell region, and takes the number of red blood cells in the red blood cell region as the number of first reference cells, and takes the number of white blood cells in the white blood cell region as the number of second reference cells.

The cell image analyzer acquires the number of reference cells in the sample to be tested, and estimates a platelet count of the sample to be tested, on the basis of the number of platelets in the cell image, the number of first reference cells, the number of second reference cells, a first reference cell count and a second reference cell count, obtained by the blood cell analyzer 110, of the sample to be tested.

In an embodiment of this application, the platelet count of the sample to be tested can be estimated according to the following formula:

$$N_{PLT} = a \bullet \frac{M_{PLT}}{M_{RBC}} \bullet N_{RBC} + b \bullet \frac{M_{PLT}}{M_{WBC}} \bullet N_{WBC}$$

$N_{PLT}$ is the platelet count to be estimated, $N_{RBC}$ is the first reference cell (e.g., red blood cell) count, detected by the blood cell analyzer 110, of the sample to be tested, and $N_{WBC}$ is the second reference cell (e.g., white blood cell) count, detected by the blood cell analyzer 110, of the sample to be tested, $M_{PLT}$ is the number of platelets in the cell image, $M_{RBC}$ is the number of reference cells in the cell image, and $M_{WBC}$ is the number of reference cells in the cell image. $0<a<l$, $0<b<l$, $a+b=l$, a and b are weighting coefficients respectively.

Optionally, $0<a<l$, $0<b<l$, $a>b$, and $a+b=l$. Since the number of red blood cells in blood is much more than the number of white blood cells, error of the count of red blood cells is relatively small. It can be considered that the weighting coefficient is increased when red blood cells are used as reference cells, and the weighting coefficient is decreased when white blood cells are used as reference cells, so as to further improve the calculation accuracy of the number of platelets.

In an embodiment of this application, the platelet count of the sample to be tested can be estimated according to the following formula:

$$N_{PLT} = \frac{M_{PLT}}{M_{RBC} + M_{WBC}} \times \left( N_{RBC} + N_{WBC} \right)$$

$N_{PLT}$ is the platelet count to be estimated, $N_{RBC}$ is the first reference cell (e.g., red blood cell) count, detected by the blood cell analyzer 110, of the sample to be tested, and $N_{WBC}$ is the second reference cell (e.g., white blood cell) count, detected by the blood cell analyzer 110, of the sample to be tested, $M_{PLT}$ is the number of platelets in the cell image, $M_{RBC}$ is the number of reference cells in the cell image, and $M_{WBC}$ is the number of reference cells in the cell image.

In an embodiment of this application, S1301 includes: the platelets and the reference cells in the cell image are identified by a trained cell type identification model.

In the embodiment of this application, the cell type identification model is a deep neural network model; and the trained cell type identification model is a cell type identification model that meets requirements and obtained through deep learning network training, which is configured to identify platelets and reference cells in the cell image, and perform statistical analysis on the number of the platelets and the number of the reference cells in the cell image.

In the embodiment of this application, for detection of the number of platelets and the number of red blood cells, a deep neural network can be used for automatic identification and counting. Compared with an ordinary artificial neural network, the deep neural network contains multiple hidden layers, which discover distributed feature representations of data through automatic learning from a large number of samples. The advantage of using the deep neural network is that it does not need manual extraction of classification features, instead, it automatically learns and mines data features, and can obtain a higher recognition accuracy.

The trained cell type identification model is obtained by training the cell type identification model through a training data set. The training data set includes cell images for training, and the cell images for training contain labeled platelets and labeled reference cells. The reference cells may be red blood cells, white blood cells, or red blood cells and white blood cells.

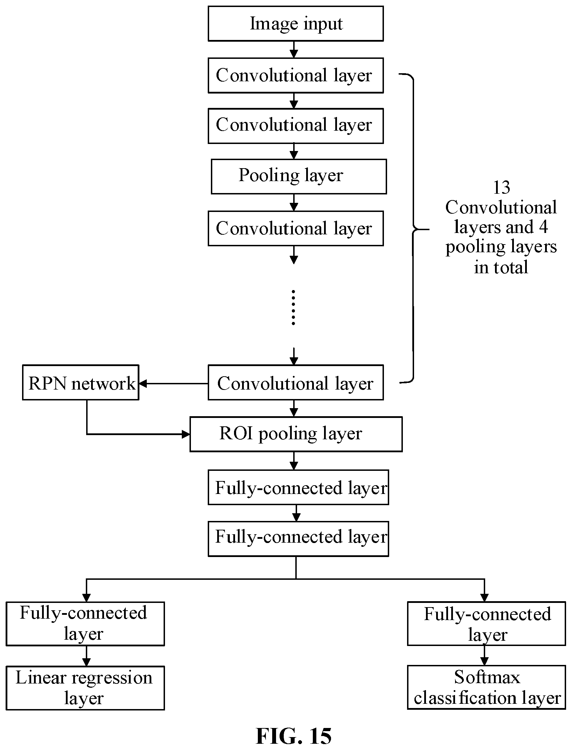

In the embodiment of this application, the deep neural network model may be a fast region convolutional neural network (Faster R-CNN) network, as shown in FIG. 15. The network consists of 13 convolutional layers, 4 pooling layers, 1 region of interest (ROI) pooling layer, 1 region proposal network (RPN), 4 fully-connected layers, 1 linear regression layer and 1 softmax classification layer. After image input, multiple convolution layers and pooling layers are used to automatically generate a feature map; then recommended candidate regions, that is, detected cell regions, are generated through the RPN network. Information of these regions is transmitted to the ROI pooling layer, and each region is reduced to the same size. Then, information of the regions of the same size is transmitted to the fully-connected layer, and finally the softmax classification layer is used to determine the cell type of these regions. Moreover, the linear regression layer is used to correct the position of the cells in the region.

The network model can also be modified, such as increasing the number of convolutional layers and pooling layers, that is, increasing a network depth. Other regional convolutional neural networks (R-CNN) models, such as R-CNN, Fast R-CNN, Mask R-CNN, or You only look once (YOLO) model and a Single Shot MultiBox Detector (SSD) model can also be used.

Deep neural network requires a large number of labeled samples for network training, to optimize a weight of each nerve cell in the network to achieve the best network performance. A gradient descent method can be used for the training of the network. According to an error between a predicted output of the current network and an actual result, the weights of all nerve cells are continuously adjusted, and finally the error between the predicted output of the network and the actual result is minimized.

In an embodiment of this application, the step that the cell image analyzer 130 estimates a platelet count of the sample to be tested according to the cell image includes the following operations.

Platelets in the cell image are identified and the number of platelets in the cell image is calculated.

A platelet count of the blood sample to be tested is estimated according to a product of the number of platelets and a predetermined coefficient.

In the embodiment of this application, the predetermined coefficient may be a constant value prestored in a storage medium of the controller of the cell image analyzer 130. The predetermined coefficient can be determined based on experience, for example. In some embodiments, the predetermined coefficient can be defined by the user and then input into the cell image analyzer 130.

The reference cells may be at least one of white blood cells and red blood cells, preferably at least including red blood cells.

In an embodiment of this application, the user identifies and counts platelets in the sample to be tested according to the cell image, and then inputs the count into the cell image analyzer 130. That is, the cell image analyzer 130 performs the following steps.

The number of platelets that is externally inputted and calculated through the cell image is received.

A platelet count of the blood sample to be tested is estimated according to a product of the number of platelets and a predetermined coefficient.

In another embodiment of this application, the cell image analyzer 130 performs the following steps.

The number of platelets that is externally inputted and calculated through the cell image is received.

Reference cells in the cell image are identified and the number of reference cells is calculated.

A reference cell count, detected by the blood cell analyzer, of the blood sample to be tested is acquired.

A platelet count of the blood sample to be tested is estimated according to the number of platelets, the number of reference cells, and the reference cell count.

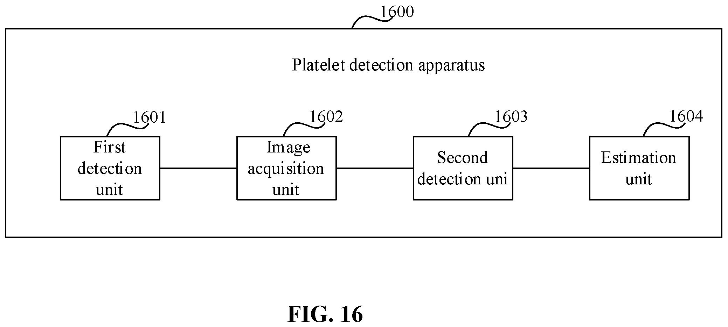

An embodiment of this application also provides a platelet detection apparatus. As shown in FIG. 16, the platelet detection apparatus 1600 may include a first detection unit 1601, an image acquisition unit 1602, a second detection unit 1603, and an estimation unit 1604. The first detection unit 1601 is configured to obtain a sample detection result of a sample to be tested by the blood cell analyzer, and to determine according to the sample detection result whether a platelet abnormality exits in the sample to be tested. The image acquisition unit 1602 is configured to acquire a cell image of a smear to be tested prepared from the sample to be tested when the first detection unit 1601 determines that a platelet abnormality exists in the sample to be tested. The second detection unit 1603 is configured to determine according to the cell image whether a platelet aggregation exists in the sample to be tested. The estimating unit 1604 is configured to estimate according to the cell image a platelet count of the sample to be tested when the second detection unit 1603 determines that no platelet aggregation exists in the sample to be tested, or to prompt whether to estimate according to the cell image a platelet count of the sample to be tested.

The above mainly introduces the solutions of the embodiments of this application from the perspective of an execution process based on methods. It can be understood that for the purpose of implementing the above functions, the apparatus includes a corresponding hardware structure and/or software module for executing various functions. Those skilled in the art may readily realize that the units and algorithm steps of each example described in combination with the embodiments provided in this application may be implemented by hardware or a combination of hardware and computer software. Whether a certain function is implemented in the form of hardware or in the form of computer software driving hardware depends on the specific applications and design constraint conditions of the technical solutions. Professionals may realize the described functions for each specific application by use of different methods, but such realization shall fall within the scope of this application.

In this embodiment of this application, the platelet detection apparatus may be divided into functional units according to the above method examples. For example, each functional unit can be divided corresponding to each function, or two or more functions can be integrated into one processing unit. The integrated unit may be implemented in a hardware form and may also be implemented in form of software functional unit. It is to be noted that the division of units in the embodiments of this application is illustrative, and is only a logical function division, and other division manners may be used in actual implementation.

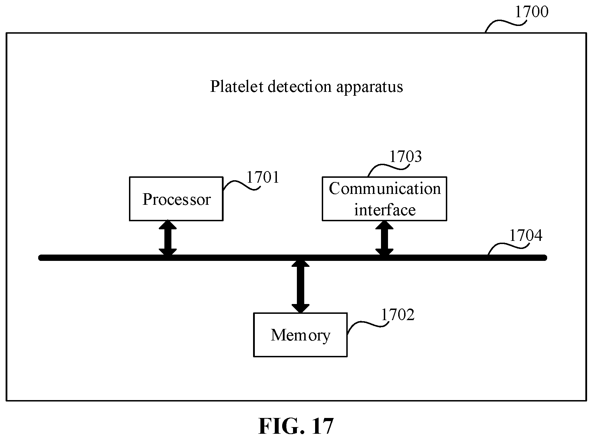

An embodiment of this application further provides another platelet detection apparatus. As shown in FIG. 17, the platelet detection apparatus 1700 includes a processor 1701, a memory 1702, and a communication interface 1703. The processor 1701, the memory 1702, and the communication interface 1703 may be connected to one another through a communication bus 1704. The memory 1702 is configured to store a computer program, the computer program includes program instructions, and the processor 1701 is configured to call the program instructions to execute part or all of steps of any of the platelet detection methods described in the foregoing embodiments.

An embodiment of this application further provides a computer storage medium, the computer storage medium storing a computer program for electronic data exchange, the computer program enabling a computer to execute part or all of steps of any of the platelet detection methods described in the foregoing embodiments.

An embodiment of this application further provides a computer program product, the computer program product includes a non-transitory computer-readable storage medium storing a computer program, the computer program enables a computer to execute part of all of steps of any one of the platelet detection methods described in the foregoing embodiments.

It is to be noted that, for simple description, each method embodiment is expressed into a combination of a series of actions. However, those skilled in the art should know that this application is not limited by an action sequence described herein because some operations may be executed in another sequence or at the same time according to this application. Second, those skilled in the art should also know that the embodiments described in the specification all belong to preferred embodiments and involved actions and modules are not always necessary to this application.

Each embodiment in the abovementioned embodiments is described with different emphases, and undetailed parts in a certain embodiment may be seen from related descriptions in the other embodiments.

The units described as separate parts may or may not be physically separated, and parts displayed as units may or may not be physical units, namely they may be located in the same place, or may be distributed to multiple network units. Part or all of the units may be selected to achieve the purpose of the solutions of the embodiments according to a practical requirement.

In addition, each functional unit in each embodiment of this application may be integrated into a processing unit, each unit may also physically exist independently, and two or more than two units may also be integrated into a unit. The integrated unit may be implemented in a hardware form and may also be implemented in form of software program module.

When being implemented in form of software program module and sold or used as an independent product, the integrated unit may be stored in a computer-readable memory. Based on such an understanding, the technical solutions of this application substantially or parts making contributions to the conventional art or all or part of the technical solutions may be embodied in form of software product, and the computer software product is stored in a memory, including multiple instructions configured to enable a computer device (which may be a personal computer, a server, a network device or the like) to execute all or part of the steps of the method in each embodiment of this application. The foregoing memory includes: various media capable of storing program codes such as a U disk, a read-only memory (ROM), a random access memory (RAM), a mobile hard disk, a magnetic disk or an optical disk.

Those of ordinary skilled in the art can understand that all or part of the operations in various methods of the embodiments may be completed by related hardware instructed by a program, the program may be stored in a computer readable memory, and the memory may include a flash disk, a ROM, a RAM, a magnetic disk, an optical disk or the like.

The features mentioned above can be arbitrarily combined with each other as long as they have meanings within the scope of this application and do not contradict each other. The advantages and features described for the sample analysis system of this application are applicable to, in a corresponding manner, the cell image analyzer, the platelet detection method, the platelet detection apparatus, the computer readable storage medium, and the computer program product of this application, and vice versa.

The embodiments of this application are introduced above in detail, the principle and implementation modes of this application are elaborated with specific examples in this application, and the descriptions made to the embodiments are only adopted to help the method of this application and the core concept thereof to be understood. In addition, those of ordinary skilled in the art may make variations to the specific implementation modes and this application scope according to the concept of this application. From the above, the contents of the specification should not be understood as limits to this application.

## Claims

1. A sample analysis system, comprising:

   a blood cell analyzer configured to detect cells in a blood sample to obtain a blood detection result;
   a smear preparation apparatus configured to prepare a smear of the blood sample;
   a cell image analyzer configured to capture an image of cells in the smear and analyze the image;
   a transport apparatus comprising a first transfer track and a second transfer track, the first transfer track being configured to transport the blood sample from the blood cell analyzer to the smear preparation apparatus, and the second transfer track being configured to transport the smear from the smear preparation apparatus to the cell image analyzer; and
   a control apparatus communicatively connected to the blood cell analyzer, the smear preparation apparatus, the cell image analyzer, and the transport apparatus, and configured to:

      acquire a blood detection result of a blood sample to be tested by the blood cell analyzer;
      when determining, according to the blood detection result, that a platelet abnormality exists in the blood sample to be tested, instruct the first transfer track to transport the blood sample to be tested to the smear preparation apparatus, instruct the smear preparation apparatus to prepare a smear to be tested of the blood sample to be tested, instruct the second transfer track to transport the smear to be tested to the cell image analyzer, and instruct the cell image analyzer to capture a cell image of the smear to be tested and analyze the cell image, wherein the cell image analyzer is configured to:
      estimate a platelet count of the blood sample to be tested according to the cell image, when determining, according to the cell image, that no platelet aggregation exists in the blood sample to be tested.

2. The sample analysis system according to claim 1, wherein the cell image analyzer is further configured to:
   when the platelet abnormality exists in the blood sample to be tested, capture a cell image of a specified region of the smear to be tested, the specified region comprising at least one of a body-tail junction region, edge regions on two sides, or a tail region of the smear to be tested.

3. The sample analysis system according to claim 1 or 2, wherein when estimating the platelet count of the blood sample to be tested according to the cell image, the cell image analyzer is further configured to:

   identify platelets and reference cells in the cell image;
   calculate a number of the platelets and a number of the reference cells in the cell image;
   acquire a reference cell count, detected by the blood cell analyzer, of the blood sample to be tested; and
   estimate the platelet count of the blood sample to be tested according to the number of the platelets, the number of the reference cells, and the reference cell count.

4. The sample analysis system according to claim 3, wherein the cell image analyzer is further configured to:
   identify the platelets and the reference cells in the cell image by using an image segmentation method or a deep learning method, and perform statistical analysis on the number of the platelets and the number of the reference cells in the cell image.

5. The sample analysis system according to claim 4, wherein the cell image analyzer is further configured to:

> identify a cell region in the cell image on the basis of feature differences between cells and a background in the cell image;
> classify cells in the cell region on the basis of feature differences between different cells, to identify a platelet region and a reference cell region in the cell region; and
> perform statistical analysis on the number of the platelets in the platelet region and the number of the reference cells in the reference cell region.

6. The sample analysis system according to claim 4, wherein the cell image analyzer is further configured to:
identify the platelets and the reference cells in the cell image by using a trained cell type identification model, and perform statistical analysis on the number of the platelets and the number of the reference cells in the cell image.

7. The sample analysis system according to any one of claims 3 to 6, wherein the reference cells comprise red blood cells.

8. The sample analysis system according to claim 1 or 2, wherein when estimating the platelet count of the blood sample to be tested according to the cell image, the cell image analyzer is further configured to:

> identify platelets in the cell image and calculate a number of the platelets in the cell image; and
> estimate the platelet count of the blood sample to be tested according to a product of the number of the platelets and a predetermined coefficient.

9. The sample analysis system according to claim 1 or 2, wherein when estimating the platelet count of the blood sample to be tested according to the cell image, the cell image analyzer is further configured to:

> receive a number of platelets that is externally inputted and calculated through the cell image, and estimate the platelet count of the blood sample to be tested according to a product of the number of the platelets and a predetermined coefficient; or
> receive a number of platelets that is externally inputted and calculated through the cell image, identify reference cells in the cell image and calculate a number of the reference cells, acquire a reference cell count, detected by the blood cell analyzer, of the blood sample to be tested, and estimate the platelet count of the blood sample to be tested according to the number of the platelets, the number of the reference cells, and the reference cell count.

10. The sample analysis system according to any one of claims 1 to 9, wherein the blood detection result of the blood sample to be tested comprises at least one of a platelet detection result or a red blood cell detection result;

> wherein the platelet detection result of the blood sample to be tested comprises at least one of a platelet count, a platelet histogram, a platelet scatter diagram, a platelet aggregation prompt, or a platelet size, detected by the blood cell analyzer, of the blood sample to be tested;
> wherein the red blood cell detection result of the blood sample to be tested comprises at least one of a microcyte detection result or a red blood cellfragment detection result, detected by the blood cell analyzer, of the blood sample to be tested.

11. The sample analysis system according to any one of claims 1 to 10, wherein the blood cell analyzer is configured to detect the blood sample to be tested by using at least one of an impedance method or an optical method, to obtain a platelet detection result and a red blood cell detection result.

12. The sample analysis system according to any one of claims 1 to 11, wherein the cell image analyzer is further configured to:
determine whether morphology of the platelets in the blood sample to be tested is abnormal according to the cell image of the smear to be tested, when the platelet abnormality exists in the blood sample to be tested.

13. The sample analysis system according to any one of claims 1 to 12, wherein the sample analysis system further comprises:
a display configured to display an analysis result of whether a platelet aggregation exists in the blood sample to be tested, and the platelet count of the blood sample to be tested.

14. A sample analysis system, comprising:

> a blood cell analyzer configured to detect cells in a blood sample, to obtain a blood detection result;
> a smear preparation apparatus configured to prepare a smear of the blood sample;
> a cell image analyzer configured to capture an image of cells in the smear and analyze the image;
> a transport apparatus comprising a first transfer track and a second transfer track, the first transfer track being configured to transport the blood sample from the blood cell analyzer to the smear preparation apparatus, and the second transfer track being configured to transport the smear from the smear preparation apparatus to the cell image analyzer; and

a control apparatus communicatively connected to the blood cell analyzer, the smear preparation apparatus, the cell image analyzer, and the transport apparatus, and is configured to:

acquire a blood detection result of a blood sample to be tested by the blood cell analyzer;

when determining, according to the blood detection result, that a platelet abnormality exists in the blood sample to be tested, instruct the first transfer track to transport the blood sample to be tested to the smear preparation apparatus, instruct the smear preparation apparatus to prepare a smear to be tested of the blood sample to be tested, instruct the second transfer track to transport the smear to be tested to the cell image analyzer, and instruct the cell image analyzer to capture a cell image of the smear to be tested,

wherein the cell image analyzer is configured to perform at least one of the following: estimate a platelet count of the blood sample to be tested according to the cell image, or determine whether a platelet aggregation exists in the blood sample to be tested according to the cell image.

15. A cell image analyzer for analyzing a smear, comprising:

a digital imaging apparatus having a plurality of objective lenses and a digital camera, the digital camera being configured to capture, under the objective lenses, an image of cells in a smear prepared from a blood sample to be tested;

a smear movement apparatus configured to adjust a relative position between the digital imaging apparatus and the smear; and

a controller comprising a memory controlled by a processor, the memory storing instructions that cause the processor to perform operations comprising:

controlling the smear movement apparatus to adjust the smear to a predetermined position;

controlling the digital camera to capture, under the objective lenses, a cell image of the smear in the predetermined position; and

estimating a platelet count of the blood sample to be tested according to the cell image, when determining, according to the cell image, that no platelet aggregation exists in the blood sample to be tested.

16. A method for automatically detecting platelets, comprising:

acquiring, by a blood cell analyzer, a blood detection result of a blood sample to be tested;

when determining, according to the blood detection result, that a platelet abnormality exists in the blood sample to be tested, preparing, by a smear preparation apparatus, a smear to be tested of the blood sample to be tested, and acquiring, by a cell image analyzer, a cell image of the smear to be tested; and

estimating, by the cell image analyzer, a platelet count of the blood sample to be tested according to the cell image, when determining that no platelet aggregation exists in the blood sample to be tested according to the cell image.

17. The method according to claim 16, wherein the acquiring, by a cell image analyzer, a cell image of the smear to be tested comprises:

acquiring a cell image of a specified region of the smear to be tested, the specified region comprising at least one of a body-tail junction region, edge regions on two sides, or a tail region of the smear to be tested.

18. The method according to claim 16 or 17, wherein the estimating, by the cell image analyzer, a platelet count of the blood sample to be tested according to the cell image comprises:

identifying platelets and reference cells in the cell image;

calculating a number of the platelets and a number of the reference cells in the cell image;

acquiring a reference cell count, detected by the blood cell analyzer, of the blood sample to be tested; and

estimating the platelet count of the blood sample to be tested according to the number of the platelets, the number of the reference cells, and the reference cell count.

19. The method according to claim 18, wherein the identifying platelets and reference cells in the cell image comprises:

identifying the platelets and the reference cells in the cell image by using an image segmentation method or a deep learning method.

20. The method according to claim 18 or 19, wherein identifying the platelets and the reference cells in the cell image comprises:

identifying a cell region in the cell image on the basis of feature differences between cells and a background in the cell image; and classifying cells in the cell region on the basis of feature differences between the different cells to identify a platelet region and a reference cell region in the cell region; and

wherein calculating the number of the platelets and the number of the reference cells in the cell image comprises:

performing statistical analysis on the number of platelets in the platelet region and the number of reference cells in the reference cell region.

21. The method according to claim 18 or 19, wherein identifying the platelets and the reference cells in the cell image comprises:

identifying the platelets and the reference cells in the cell image by using a trained cell type identification model.

22. The method according to claim 16 or 17, wherein the estimating, by the cell image analyzer, a platelet count of the blood sample to be tested according to the cell image comprises:

identifying the platelets in the cell image and calculating a number of the platelets in the cell image; and
estimating the platelet count of the blood sample to be tested according to a product of the number of the platelets and a predetermined coefficient.

23. The method according to claim 16 or 17, wherein the estimating, by the cell image analyzer, a platelet count of the blood sample to be tested according to the cell image comprises:

receiving, by the cell image analyzer, a number of the platelets that is externally inputted and calculated through the cell image; estimating the platelet count of the blood sample to be tested according to a product of the number of the platelets and a predetermined coefficient; or
receiving, by the cell image analyzer, the number of the platelets that is externally inputted and calculated through the cell image; identifying reference cells in the cell image and calculating a number of the reference cells; acquiring a reference cell count, detected by the blood cell analyzer, of the blood sample to be tested; estimating a platelet count of the blood sample to be tested according to the number of the platelets, the number of the reference cells, and the reference cell count.

24. The method according to any one of claims 16 to 23, wherein the blood detection result of the blood sample to be tested comprises at least one of a platelet detection result or a red blood cell detection result;

wherein the platelet detection result of the blood sample to be tested comprises at least one of a platelet count, a platelet histogram, a platelet scatter diagram, a platelet aggregation prompt, or a platelet size, detected by the blood cell analyzer, of the blood sample to be tested;
wherein the red blood cell detection result of the blood sample to be tested comprises at least one of a microcyte detection result or a red blood cellfragment detection result, detected by the blood cell analyzer, of the blood sample to be tested.

25. The method according to claim 24, wherein the platelet abnormality is determined to exist in the blood sample to be tested in at least one of the following cases:

the platelet count detected by the blood cell analyzer exceeds a preset numerical range,
the blood analyzer prompts that a platelet aggregation exists in the blood sample to be tested,
the blood cell analyzer detects that a certain number of giant platelets exist in the blood sample to be tested,
the blood cell analyzer detects that a certain number of microcytes exist in the blood sample to be tested, or
the blood cell analyzer detects that a certain number of red blood cellfragments exist in the blood sample to be tested.

26. The method according to any one of claims 16 to 25, wherein acquiring, by the blood cell analyzer, the blood detection result of the blood the blood sample to be tested comprises:
detecting, by the blood cell analyzer, the blood sample to be tested by using at least one of an impedance method or an optical method to obtain a platelet detection result and a red blood cell detection result.

27. The method according to claim 26, wherein detecting, by the blood cell analyzer, the blood sample to be tested by using at least one of the impedance method or the optical method to obtain the platelet detection result comprises:

detecting, by the blood cell analyzer, the blood sample to be tested by using the impedance method to obtain an impedance method-based platelet detection result; and
when the impedance method-based platelet detection result indicates that a platelet abnormality exists in the blood sample to be tested, detecting, by the blood cell analyzer, the blood sample to be tested by using the optical method to obtain an optical method-based platelet detection result, wherein the blood detection result comprises the impedance method-based platelet detection result and the optical method-based platelet detection result.

28. The method according to any one of claims 16 to 27, wherein the method further comprises:
when the cell image analyzer determines that a platelet aggregation exists in the blood sample to be tested according to the cell image, performing at least one of the following:

outputting a prompt that a platelet aggregation exists in the blood sample to be tested, or outputting a prompt that a new blood sample to be tested of a same subject is needed for platelet re-test.

29. The method according to any one of claims 16 to 28, wherein the method further comprises:
determining, by the cell image analyzer, whether morphology of platelets in the blood sample to be tested is abnormal according to the cell image of the smear to be tested.

30. The method according to any one of claims 16 to 29, wherein the method further comprises:
outputting an analysis result of whether a platelet aggregation exists in the blood sample to be tested, and the platelet count of the blood sample to be tested.

31. A method for automatically detecting platelets, comprising:

acquiring, by a blood cell analyzer, a blood detection result of a blood sample to be tested;
when determining, according to the blood detection result, that a platelet abnormality exists in the blood sample to be tested,

transporting, by a first transfer track, the blood sample to be tested from the blood cell analyzer to a smear preparation apparatus;
preparing, by the smear preparation apparatus, a smear to be tested of the blood sample to be tested;
transporting, by a second transfer track, the smear to be tested from the smear preparation apparatus to a cell image analyzer;
capturing, by the cell image analyzer, a cell image of the smear to be tested; and
performing at least one of the following: estimating a platelet count of the blood sample to be tested according to the cell image, or determining whether a platelet aggregation exists in the blood sample to be tested according to the cell image.

32. A computer readable storage medium, the computer readable storage medium storing a computer program, the computer program comprising program instructions that, when executed by a processor, cause the processor to perform the method according to any one of claims 16 to 31.

**FIG. 1**

**FIG. 2**

**FIG. 3**

Cell image analyzer 130

Imaging apparatus 131

Camera 1312

Lens group 1311

Controller 133

Smear gripping apparatus 135

Identification apparatus 134

Smear recycle apparatus 136

Slide basket loading apparatus 137

Smear movement apparatus 132

**FIG. 4**

Digital imaging
apparatus 131

Ocular lens

Third
objective
lens

Second
objective lens

First objective
lens

Slide basket
20

Smear
movement
apparatus 132

Smear 21

**FIG. 5**

**FIG. 6**

**FIG. 7**

```
┌─────────────────────────────────────────────────────────────┐      801
│  A blood cell analyzer acquires blood detection result of a  │    ╱
│                    sample to be tested                        │  ╱
└─────────────────────────────────────────────────────────────┘
                              │
                              ▼
                    ╱◇◇◇◇◇◇◇◇◇◇◇◇◇╲
            ╱◇◇◇◇◇◇  Whether a platelet abnormality  ◇◇◇◇◇◇╲
            ╲◇◇◇◇◇◇              exists              ◇◇◇◇◇◇╱
                    ╲◇◇◇◇◇◇◇◇◇◇◇◇◇╱
                              │
                         Yes  │
                              ▼
┌─────────────────────────────────────────────────────────────┐      802
│  A smear preparation apparatus prepares a smear to be tested │    ╱
│              of the sample to be tested                       │  ╱
└─────────────────────────────────────────────────────────────┘
                              │
                              ▼
┌─────────────────────────────────────────────────────────────┐      803
│   A cell image analyzer acquires a cell image of the smear    │    ╱
│  to be tested, and determines whether a platelet aggregation  │  ╱
│  exists in the sample to be tested according to the cell      │
│  image, and/or estimates a platelet count of the sample to    │
│  be tested according to the cell image                        │
└─────────────────────────────────────────────────────────────┘
```

**FIG. 8**

A blood cell analyzer acquires a blood detection result of a sample to be tested — 901

Whether a platelet abnormality exists

Yes

A smear preparation apparatus prepares a smear to be tested of the sample to be tested — 902

A cell image analyzer acquires a cell image for the smear to be tested — 903

Whether a platelet aggregation exists — No

Yes

905

Output a prompt that a platelet aggregation exists in the sample to be tested and/or output a prompt that a new blood sample to be tested of the same subject is needed for platelet re-test

904

The cell image analyzer estimates a platelet count of the sample to be tested according to the cell image, or prompts whether to estimate a platelet count of the sample to be tested according to the cell image

**FIG. 9**

A blood cell analyzer acquires a blood detection result of a sample to be tested — 1001

Whether a platelet abnormality exists

Yes

A first transfer track transports the sample to be tested from the blood cell analyzer to a smear preparation apparatus — 1002

The smear preparation apparatus prepares a smear to be tested of the sample to be tested — 1003

A second transfer track transports the smear to be tested from the smear preparation apparatus to a cell image analyzer — 1004

The cell image analyzer captures a cell image of the smear to be tested and estimates a platelet count for the sample to be tested according to the cell image and/or determines whether a platelet aggregation exists in the sample to be tested according to the cell image — 1005

**FIG. 10**

The blood cell analyzer detects the sample to be tested by using an impedance method to obtain an impedance method-based platelet detection result — 1101

Whether a platelet abnormality exists

Yes

The blood cell analyzer detects sample to be tested by using an optical method to obtain an optical method-based platelet detection result — 1102

Whether a platelet abnormality exists

Yes

A smear preparation apparatus prepares a smear to be tested of the sample to be tested — 1103

A cell image analyzer acquires a cell image of the smear to be tested, and determines whether a platelet aggregation exists in the sample to be tested according to the cell image, and/or estimates a platelet count of the sample to be tested, according to the cell image — 1104

**FIG. 11**

Acquire a blood detection result of a sample to be tested by a blood cell analyzer / 1201

Whether a platelet abnormality exists

Yes / 1202

Acquire a cell image of the smear to be tested prepared from the sample to be tested

Whether a platelet aggregation exists

No

Estimate a platelet count of the sample to be tested according to the cell image, or prompt whether to estimate the platelet count of the sample to be tested according to the cell image / 1203

**FIG. 12**

```
┌─────────────────────────────────────────────────────────────┐  ╱ 1301
│                                                               │ ╱
│   Identify platelets and reference cells in the cell image    │╱
│                                                               │
└─────────────────────────────────────────────────────────────┘
                              │
                              ▼
┌─────────────────────────────────────────────────────────────┐  ╱ 1302
│  Calculate the number of platelets and the number of          │ ╱
│  reference cells in the cell image                            │╱
└─────────────────────────────────────────────────────────────┘
                              │
                              ▼
┌─────────────────────────────────────────────────────────────┐  ╱ 1303
│  Acquire a reference cell count, detected by the blood cell   │╱
│  analyzer, of the sample to be tested                         │
└─────────────────────────────────────────────────────────────┘
                              │
                              ▼
┌─────────────────────────────────────────────────────────────┐  ╱ 1304
│  Estimate a platelet count of the sample to be tested         │╱
│  according to the number of platelets, the number of          │
│  reference cells, and the reference cell count                │
└─────────────────────────────────────────────────────────────┘
```

**FIG. 13**

**FIG. 14**

Image input

↓

Convolutional layer

↓

Convolutional layer

↓

Pooling layer

↓

Convolutional layer

↓

⋮

↓

RPN network ← Convolutional layer

↓

ROI pooling layer

↓

Fully-connected layer

↓

Fully-connected layer

Fully-connected layer → Linear regression layer

Fully-connected layer → Softmax classification layer

13 Convolutional layers and 4 pooling layers in total

**FIG. 15**

1600

Platelet detection apparatus

| 1601 | 1602 | 1603 | 1604 |
| First detection unit | Image acquisition unit | Second detection uni | Estimation unit |

**FIG. 16**

1700

Platelet detection apparatus

1703

Processor 1701

Communication interface

1704

Memory 1702

**FIG. 17**

## INTERNATIONAL SEARCH REPORT

| International application No. |
|---|
| **PCT/CN2019/123819** |

### A. CLASSIFICATION OF SUBJECT MATTER

G01N 35/04(2006.01)i;  G01N 35/02(2006.01)i;  G01N 35/00(2006.01)i

According to International Patent Classification (IPC) or to both national classification and IPC

### B. FIELDS SEARCHED

Minimum documentation searched (classification system followed by classification symbols)

G01N

Documentation searched other than minimum documentation to the extent that such documents are included in the fields searched

Electronic data base consulted during the international search (name of data base and, where practicable, search terms used)

CNPAT, CNKI, EPODOC, WPI, CNTXT: 迈瑞生物, 雅培实验室, 爱威科技, 祁欢, 李朝阳, 样本分析, 自动分析, 第一, 第二, 传送, 运送, 计数, 异常, 涂片, 图像, 轨道, 血液, 血小板, 参考, 分类, 深度, 学习, 网络, 神经, 训练, 物镜, 数字, 成像, 聚集, sample, analysis, automatic, first, second, transfer, carry, count, abnormal, smear, image, track, blood, platelet, sort, train, digit, aggregation

### C. DOCUMENTS CONSIDERED TO BE RELEVANT

| Category* | Citation of document, with indication, where appropriate, of the relevant passages | Relevant to claim No. |
|---|---|---|
| X | CN 109313209 A (ABBOTT LABORATORIES) 05 February 2019 (2019-02-05) description, paragraphs [0081]-[0205], and figures 1-64 | 1-32 |
| X | CN 105136795 A (AVE SCIENCE & TECHNOLOGY CO., LTD.) 09 December 2015 (2015-12-09) description, paragraphs [0008]-[0182], 1-6 | 1-32 |
| A | CN 101086496 A (SHANDONG PREPOTENCY MEDICAL TECHNOLOGY CO., LTD.) 12 December 2007 (2007-12-12) entire document | 1-32 |
| A | CN 1945326 A (JIANGXI TECOM SCIENCE CORPORATION) 11 April 2007 (2007-04-11) entire document | 1-32 |
| A | EP 1460428 A1 (DELTA BIOLOGICALS S.R.L.) 22 September 2004 (2004-09-22) entire document | 1-32 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 August 2020** | **28 August 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2019/123819** |

| Patent document cited in search report | | | Publication date (day/month/year) | Patent family member(s) | | | Publication date (day/month/year) |
| --- | --- | --- | --- | --- | --- | --- | --- |
| CN | 109313209 | A | 05 February 2019 | US | 10648995 | B2 | 12 May 2020 |
| | | | | US | 2017176481 | A1 | 22 June 2017 |
| | | | | EP | 3391058 | A1 | 24 October 2018 |
| | | | | JP | 2019506619 | A | 07 March 2019 |
| | | | | WO | 2017106271 | A1 | 22 June 2017 |
| CN | 105136795 | A | 09 December 2015 | CN | 105136795 | B | 11 December 2018 |
| CN | 101086496 | A | 12 December 2007 | CN | 101086496 | B | 23 May 2012 |
| CN | 1945326 | A | 11 April 2007 | EP | 2083268 | A1 | 29 July 2009 |
| | | | | JP | 2010506175 | A | 25 February 2010 |
| | | | | US | 2010054575 | A1 | 04 March 2010 |
| | | | | WO | 2008046292 | A1 | 24 April 2008 |
| EP | 1460428 | A1 | 22 September 2004 | US | 2004253149 | A1 | 16 December 2004 |
| | | | | JP | 2004286748 | A | 14 October 2004 |
| | | | | IT | MI20030550 | A1 | 22 September 2004 |

Form PCT/ISA/210 (patent family annex) (January 2015)